# EUROPÄISCHE PATENTSCHRIFT

(11) **EP 2 552 566 B1**
(45) Veröffentlichungstag und Bekanntmachung des Hinweises auf die Patenterteilung: **20.09.2017**
(21) Anmeldenummer: 11712808.2
(22) Anmeldetag: 28.03.2011
(51) Int. Cl.: B01D 39/16, D04H 1/74, D04H 5/06, D04H 13/00, D06M 13/44, C09K 3/16

(54) **SPEICHERFILTERVLIESE**
NONWOVEN STORAGE FILTERS
NON-TISSÉ FILTRANT À ACCUMULATION

(30) Priorität: 23.10.2010 DE 102010049425; 30.03.2010 DE 102010013373
(43) Veröffentlichungstag der Anmeldung: 06.02.2013
(73) Patentinhaber: Nanogate AG, 66287 Göttelborn (DE); DencoHappel GmbH, 44625 Herne (DE)
(72) Erfinder: BENDJABALLAH, Salah, 66119 Saarbrücken (DE); BECKER, Mathias, 66119 Saarbrücken (DE); ALTMAYER, Jessica, 66287 Göttelborn (DE); RÖSCH, Herbert, F-57600 Forbach (FR); BERNSTORFF, Olaf, 58455 Witten (DE)
(74) Vertreter: dompatent von Kreisler Selting Werner - Partnerschaft von Patent- und Rechtsanwälten mbB
(86) Internationale Anmeldenummer: PCT/EP2011/054749
(87) Internationale Veröffentlichungsnummer: WO 2011/124497

(56) Entgegenhaltungen:
- EP-A1- 0 498 002
- DE-A1- 1 719 543
- DE-A1- 4 443 158
- GB-A- 2 377 229
- US-A- 4 822 529
- US-A1- 2008 022 645

## Beschreibung

Die vorliegende Erfindung betrifft Filtervliese, beispielsweise für Taschenfilter für die allgemeine Raum- und Prozesslufttechnik sowie ein Verfahren zu deren Herstellung.

Um für die allgemeine Raum- und Prozesslufttechnik geeignet zu sein, müssen Filtervliese einen Anfangsdruckabfall gemäß DIN EN 779:2005 von höchstens (weniger als) 400 Pa aufweisen, da sie sonst dem Luftstrom zu viel Widerstand entgegensetzen und damit für Raum- und Prozesslufttechnische Anlagen ungeeignet sind. Deshalb werden beispielsweise in Klimaanlagen zumeist Taschenfilter eingesetzt.

Bislang gab es die Auffassung, dass sich der Luftwiderstand und vor allem der Anfangsdruckabfall in Taschenfiltern erheblich erhöhen, wenn ein Taschenfilter flammschutzbehandelt wird. Lediglich Filter, bei denen starke Gebläse eingesetzt werden und bei denen Lärmentwicklung und erhöhte Druckdifferenzen keine große Rolle spielen, konnten bislang mit Flammschutzmitteln ausgerüstet werden. In Klimaanlagen, beispielsweise für Bürogebäude war eine Flammschutzausrüstung bislang undenkbar, da angenommen wurde, dass damit eine erhebliche Geräuschentwicklung einhergeht und eine wesentlich höhere Gebläseleistung notwendig würde.

Beispielsweise offenbart EP 1 594 590 B1 ein Luftgebläse für Tunnelarbeiten und den Bergbau, bei dem der Luftfilter mit einer schwer entflammbaren, antistatischen und mikroporösen Schaummembran beschichtet wird (vgl. Anspruch 7). Diese Schaummembran wäre jedoch für einen Taschenfilter einer Klimaanlage ungeeignet, da eine solche Schaummembran zu einem erheblichen anfänglichen Druckabfall führen würde.

US 2009/0050578 A1 beschreibt ein Filtermedium mit einem Partikel enthaltenden Filterbett, wobei die Partikel des Filterbetts mit einem Schlamm oder einem Schlicker behandelt werden, so dass sie antistatisch oder flammgeschützt sein können (vgl. Anspruch 63). Ein solcher Partikel enthaltender Filtertyp hat üblicherweise einen um Größenordnungen höheren Anfangsdruckabfall als Filter für Klimaanlagen und ist somit für Klimaanlagen nicht geeignet.

EP 0 248 182 B1 beschreibt eine Materialbahn für Filterzwecke, die ebenfalls antistatisch oder flammhemmend ausgerüstet sein kann (vgl. Anspruch 7). Auch diese Filterbahn ist im Industriebereich für Papiermaschinen eingesetzt, wo wiederrum Lärmentwicklung und Druckabfall keine große Rolle spielen. Diese Filterbahn weist eine Schaumschicht auf, die das dort offenbarte Filtervlies aus vorgenannten Gründen ungeeignet für Klimaanlagen werden lässt.

EP 0 498 002 A1 beschreibt ein selbsttragendes, plissier- und prägefähiges Meltblown-Vlies, Verfahren zu dessen Herstellung und dessen Verwendung als Filtermaterial. Selbsttragende, plissier- und prägefähige Meltblown-Vliese werden durch innere Verstärkung von Rohvliesen mit natürlichen oder synthetischen Imprägniermitteln aus wässrigen oder nichtwässrigen Systemen hergestellt, wobei ein Verschließen der Poren verhindert wird und die Porenstruktur weitgehend erhalten bleibt. Der Imprägniermittelflotte können Zusatzstoffe zur Modifizierung der Eigenschaften des Vlieses zugesetzt sein. Die erfindungsgemäßen Meltblown-Vliese sind besonders zur Verwendung als Filtermaterialien geeignet. EP 0 498 002 A1 offenbart ein schmelzgeblasenes Filtervlies aus Polypropylen mit einem Flächengewicht von 147 g/m**²**, einer Dicke von 1,2 mm, das mit einer Imprägnierlösung behandelt und anschließend getrocknet wird. Die Imprägnierlösung enthält ein Flammschutz-, Antistatik- und antimikrobielles Mittel. Das Vlies kann für Klimaanlagen verwendet werden und behält auch nach der Imprägnierung gute Luftdurchlässigkeit.

DE 92 15 484.0 U1 beschreibt ein antistatisch ausgerüstetes hydrophobes Verbundmaterial aus Vliesschichten aus thermoplastischem Kunststoff.

Aufgabe der vorliegenden Erfindung ist es also, ein Speicherfiltervlies für die allgemeine Raum- und Prozesslufttechnik bereitzustellen, das zum einen für Taschenfilter beispielsweise von Klimaanlagen hervorragend geeignet ist und dennoch mit mindestens einem Antistatikmittel und/oder einem Flammschutzmittel (behandelt) ausgerüstet sein kann.

Diese Aufgabe wird in einer ersten Ausführungsform gelöst durch ein Speicherfiltervlies für die allgemeine Raum- und Prozesslufttechnik, gemäß Anspruch 1.

Anlagen für die allgemeine Raum- und Prozesslufttechnik umfassen beispielsweise Klimaanlagen für Bürogebäude, Gewerbeimmobilien, Flughäfen und Krankenhäuser wie auch die Zuluftaufbereitung der Prozessluft bei industriellen Prozessen.

Überraschend wurde gefunden, dass bei der Ausrüstung eines ganz bestimmten Vliesmaterials mit der erfindungsgemäßen Kombination aus (a) Antistatikmittel, Flammschutzmittel und antimikrobiellem Mittel, (b) Antistatikmittel und Flammschutzmittel, (c) Antistatikmittel und antimikrobiellem Mittel oder (d) antimikrobiellem Mittel und Flammschutzmittel, insbesondere einem Antistatikmittel und /oder einem Flammschutzmittel oder insbesondere einem antimikrobiellen Mittel und optional mit einem Flammschutzmittel das entstehende Filtervlies hervorragend für Klimaanlagen und insbesondere für Taschenfilter von Klimaanlagen geeignet sein kann. Ausrüstung im Sinne der Erfindung umfasst immer eine nasschemische Behandlung der Fasern oder Vliese beispielsweise durch Foulardierung oder Sprühapplikation. Bislang wurden nämlich beispielsweise Metallfäden in das Filtervlies mit eingewebt oder Schaumschichten auf ein Filtervlies aufgebracht, um einem Filtervlies antistatische, antimikrobielle und/oder flammhemmende Eigenschaften zu verleihen. Diese Maßnahmen haben jedoch bislang zu einem erheblichen Anfangsdruckabfall geführt, wodurch die Filter für Raum- und Prozesslufttechnische Anlagen ungeeignet sind. Mit dem erfindungsgemäßen Filtervlies ist es erstmals möglich, beispielsweise Taschenfilter von Klimaanlagen ohne nennenswerte Zunahme des Luftwiderstandes antistatisch, antimikrobiell und/oder flammhemmend herzustellen.

Vorzugsweise ist das Filtervlies wenigstens zweilagig, insbesondere wenigstens dreilagig ausgestaltet, wobei dann eine Lage Spinnvlies mit einem Flächengewicht in einem Bereich von 10 bis 50 g/m² an eine Lage schmelzgeblasenes Vlies mit einem Flächengewicht in einem Bereich von 3 bis 80 g/m² angrenzt, an die wiederum eine Lage aus trockengelegtem Vlies mit einem Flächengewicht in einem Bereich von 50 bis 250 g/m² angrenzen kann.

Beispielsweise beträgt der Anfangsdruckabfall des eingesetzten Filtervlieses bzw. des konfektionierten Produktes gemäß DIN EN 779:2005 typischerweise höchstens 200, insbesondere 400 Pa.

Dabei hat das trockengelegte Vlies beispielsweise eine Dicke in einem Bereich von 1 bis 10 mm. Unabhängig davon hat das schmelzgeblasene Vlies beispielsweise eine Dicke in einem Bereich von 0,05 bis 1 mm. Wiederum unabhängig davon hat die Lage des Spinnvlieses beispielsweise eine Dicke in einem Bereich von 0,05 bis 1 mm. Bei Unterschreitung dieser Schichtdicken wurde festgestellt, dass die resultierenden Taschenfilter eine verhältnismäßig schlechte Staubspeicherfähigkeit aufwiesen. Bei einer Überschreitung dieser Bereiche konnte eine deutliche Zunahme des Anfangsdruckabfalls und des Luftwiderstandes beobachtet werden.

Das Flammschutzmittel ist vorteilhafterweise ausgewählt aus der Gruppe Ammoniumverbindungen, Phosphor-Stickstoff-Verbindungen, Phosphorsäureester und deren Salze, Blähgraphit, polybromierte Diphenylether, polybromierte Diphenyle, Chlorparaffine, Tetrabrombisphenol A und/oder Hexabromcyclododecan. Für diese Flammschutzmittel hat sich gezeigt, dass diese besonders einfach mit Hilfe einer Ausrüstung auf die Fasern aufgebracht werden können.

Das Antistatikmittel kann beispielsweise anorganisch oder organisch sein. Die durchschnittliche Partikelgröße des Antistatikmittels, sofern es in fester Form vorliegt, liegt beispielsweise in einem Bereich von 2 bis 300 nm, insbesondere in einem Bereich von 5 bis 100 nm.

Das Antistatikmittel ist vorteilhafterweise ausgewählt aus der Gruppe langkettige, aliphatische Amine und Amide, Ammoniumverbindungen, Zinnmischoxide, Phosphor-Stickstoff-Verbindungen, Phosphorsäureester und deren Salze. Ganz besonders bevorzugt ist das Antistatikmittel ausgewählt aus Antimonzinnoxid, Indiumzinnoxid oder aus einem Gemisch aus Oligo- und/oder Polyethylenglykol und einem Natriumsalz eines Phosphorsäureesters oder Phosphor-Stickstoff-Verbindungen.

Diese Antistatikmittel haben sich als besonders geeignet erwiesen, mit Hilfe einer Ausrüstung auf die Fasern aufgebracht zu werden, ohne den Luftwiderstand der Taschenfilter zu sehr zu erhöhen.

Oligo- und/oder Polyethylenglykol ist bevorzugter Bestandteil des Flammschutzmittels und/oder des Antistatikmittels. Überraschend wurde nämlich gefunden, dass bei Zuhilfenahme von Oligo- und/oder Polyethylenglykol als Bestandteil bei der Ausrüstung der resultierende Druckabfall besonders niedrig ist. Die Menge an Oligo- und/oder Polyethylenglykol auf/in dem Taschenfilter beträgt 0,01 bis 3 Gew.-%, bezogen auf das Gewicht des ausgerüsteten Taschenfilters. Besonders bevorzugt sind dabei Molmassen ab 300g/mol.

Bevorzugt ist als Flammschutzmittel und/oder als Antistatikmittel eine Kombination aus einem stickstoffhaltigen Phosphorsalz und wenigstens einer weiteren Phosphorverbindung. Diese Kombination hat überraschenderweise sowohl eine Wirkung als Flammschutzmittel als auch als Antistatikum.

Besonders bevorzugt ist die Kombination eines Salzes eines Phosphorsäureesters mit einem Ammoniumsalz von Phosphorsäureestern. Das Salz eines Phosphorsäureesters ist vorzugsweise ein Mono- oder Di-Ammonium-Salz.

Ein antimikrobielles Mittel ist gemäß der Internetzenzyklopädie Wikipedia ein Stoff, der die Vermehrungsfähigkeit oder Infektiosität von Mikroorganismen reduziert oder sie abtötet beziehungsweise inaktiviert. Zu jenen antimikrobiellen Mitteln, die beispielsweise als spezifisches Medikament bei einer Infektionskrankheit eingesetzt werden, gehören die Antibiotika gegen Bakterien und die Antimykotika gegen Pilze und pathogene Hefen (beispielsweise Candida spp.). Des Weiteren werden alle Antiparasitika zu den antimikrobiellen Mitteln gerechnet, zu denen wiederum die Antiheiminthika gegen parasitäre Würmer und die Antiprotozoika gegen pathogene Amöben (beispielsweise Giardia spp.) gerechnet werden. Diese antimikrobiellen Mittel werden auch gelegentlich als Antimikrobiotikum (Plural: Antimikrobiotika) bezeichnet.

Neben diesen Substanzgruppen, die der unmittelbaren spezifischen Therapie dienen, zählen im Sinne der vorliegenden Erfindung auch alle Desinfektionsmittel zu den antimikrobiellen Mitteln. Diese können neben den oben genannten Erregern auch Viren inaktivieren. Es gibt auch technisch hergestellte Oberflächenstrukturen, die durch desinfizierende Wirkung (z.B. Silber) oder mittels Nanostrukturen aus Titandioxid antimikrobiell wirksam sind.

Zu den antimikrobiell wirksamen Mitteln allgemein gehören auch physikochemische oder physikalische Einflüsse, die auch eine antimikrobielle Wirkung besitzen wie beispielsweise der pH-Wert, Hitzeeinwirkung (Pasteurisierung, Hitzesterilisation) oder ionisierende Strahlung (Gammastrahlung). Diese sind jedoch keine Ausrüstung oder Mittel im Sinne der vorliegenden Erfindung.

Die antimikrobielle Ausrüstung ist ein relativ neues Verfahren, um Textilien so zu bearbeiten, dass Bakterien und Pilze in ihrer Vermehrung gehemmt werden. Bakterien auf der Haut vermehren sich in Anwesenheit von Schweiß sehr schnell und verursachen unangenehme Gerüche.

Das Verfahren wird unter anderem bei der Herstellung von Sportbekleidung verwendet, die vom Schwitzen besonders betroffen ist.

Es gibt verschiedene Methoden zur antimikrobiellen Ausrüstung:
- Silberfäden werden beim Zwirnen um ein zweites Trägergarn gewickelt. Der Silberfaden hat auch eine kühlende Wirkung, wenn er in einem Textil am Körper getragen wird.
- Beim Schmelzspinnen können der flüssigen Polymerschmelze Silberionen beigegeben werden. Damit entstehen synthetische Fasern, die zusätzlich zu ihrer guten Eigenschaft, Feuchtigkeit schnell abzutransportieren, auch noch die Geruchsbildung hemmen. Da die Silberionen in der Faser enthalten sind, werden sie nicht so schnell ausgewaschen, als wenn sie an der Oberfläche haften.
- Das fertige Textil kann mit bakteriziden Substanzen behandelt werden. Diese werden jedoch relativ schnell ausgewaschen.

Bei den auf dem Markt angebotenen antimikrobiellen Mitteln auf Textilien ist darauf zu achten, ob diese diffundieren oder auf der Ware verbleiben. Nicht diffundierende Mittel können durch den Dynamic Shake Flash Test auf ihre Wirkung getestet werden. Diffundierende Mittel hingegen können durch den Agar-Diffusion-Test getestet werden. Solche Mittel bilden in der Petrischale einen Hemmhof in der Bakterienkultur aus.

Das antimikrobielle Mittel ist vorzugsweise ausgewählt aus den Gruppen der organischen und / oder anorganischen Biozide, die gemäß der EU Biozidrichtlinie Hauptgruppe 2: Schutzmittel; Produktart 7: Beschichtungsschutzmittel und Produktart 9: Schutzmittel für Fasern, Leder, Gummi und polymerisierte Materialien Einsatz finden und zugelassen sind. Weiterhin wird auch Kupfer sowie Benzalkoniumchlorid besonders bevorzugt.

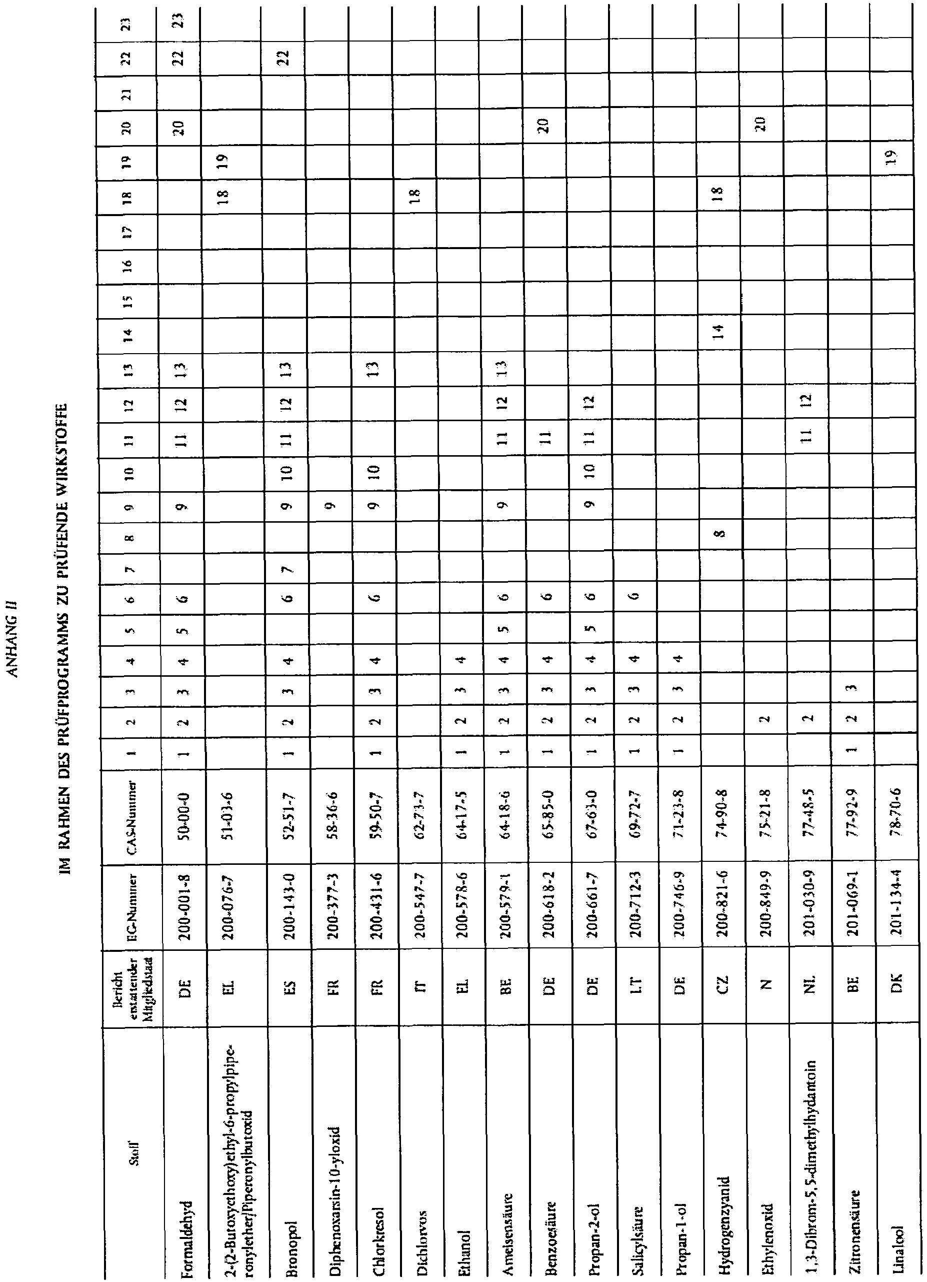

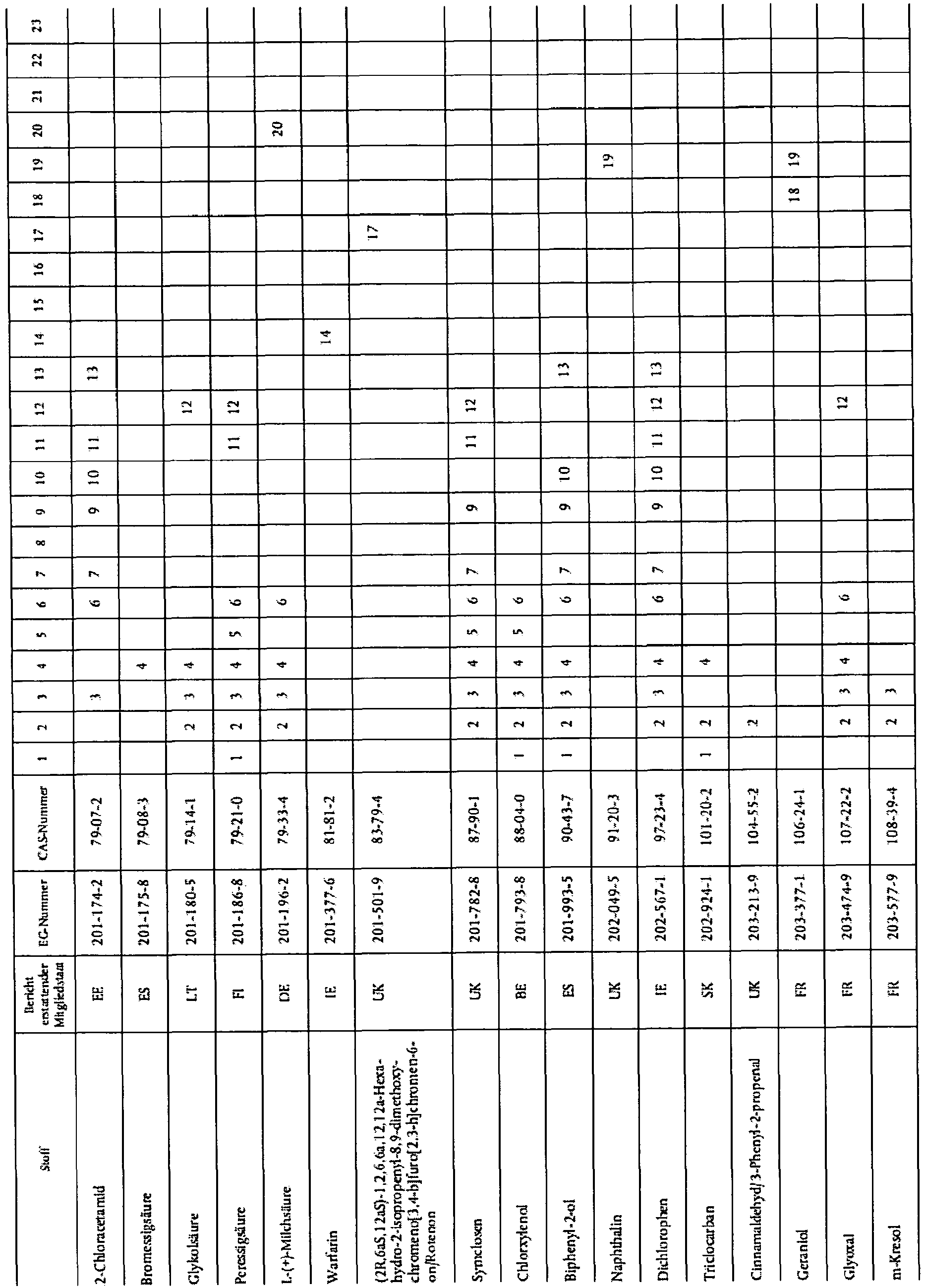

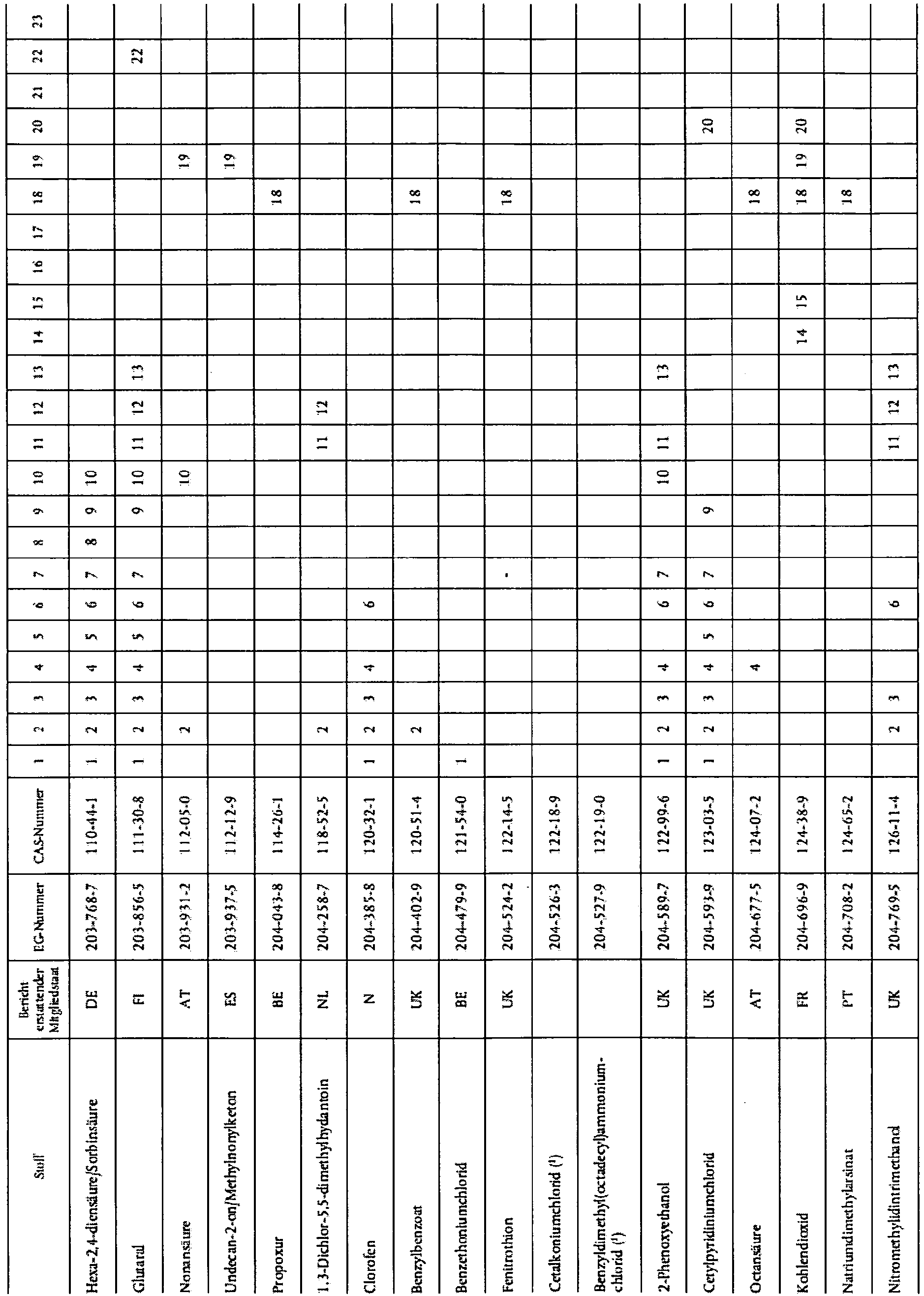

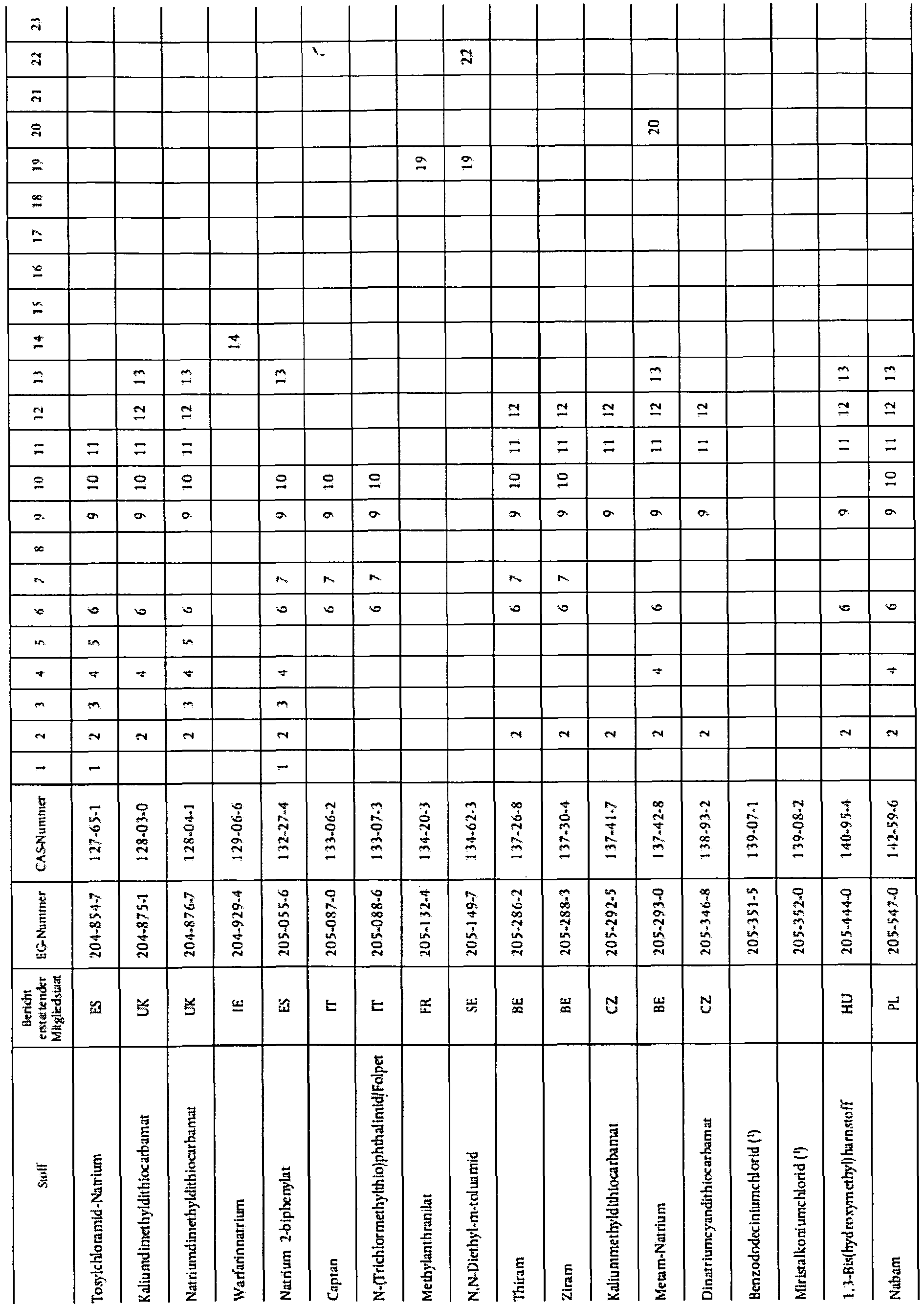

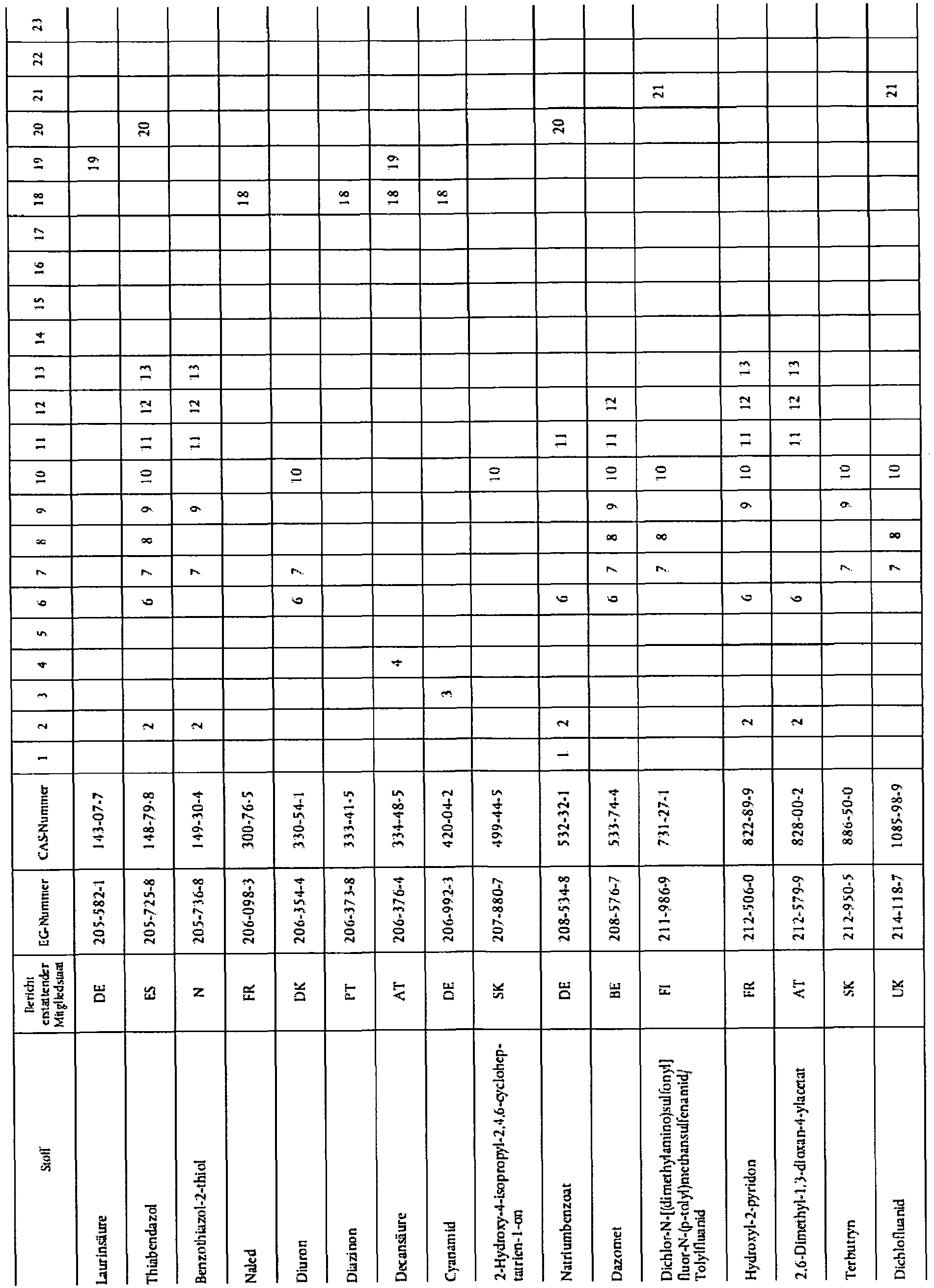

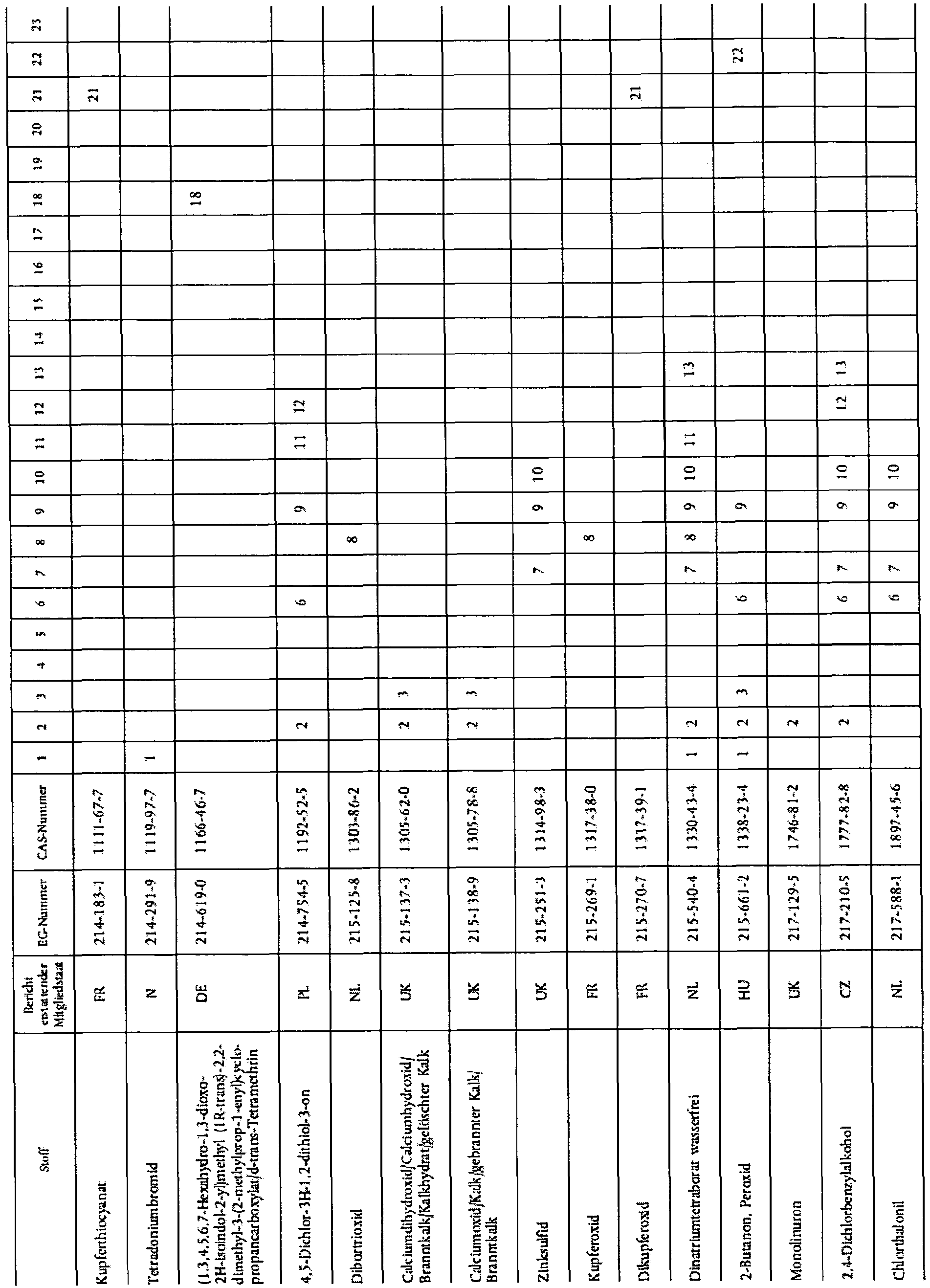

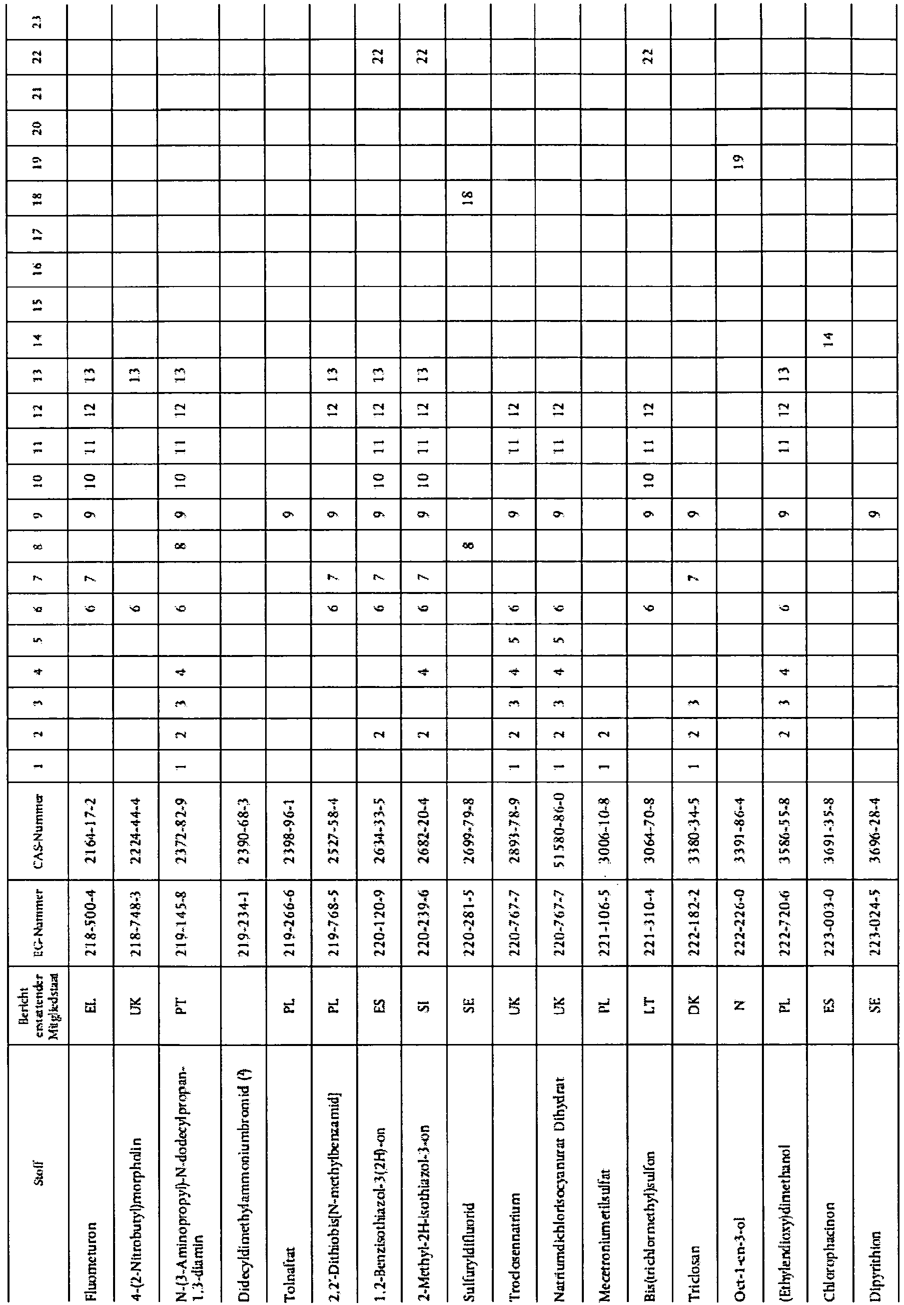

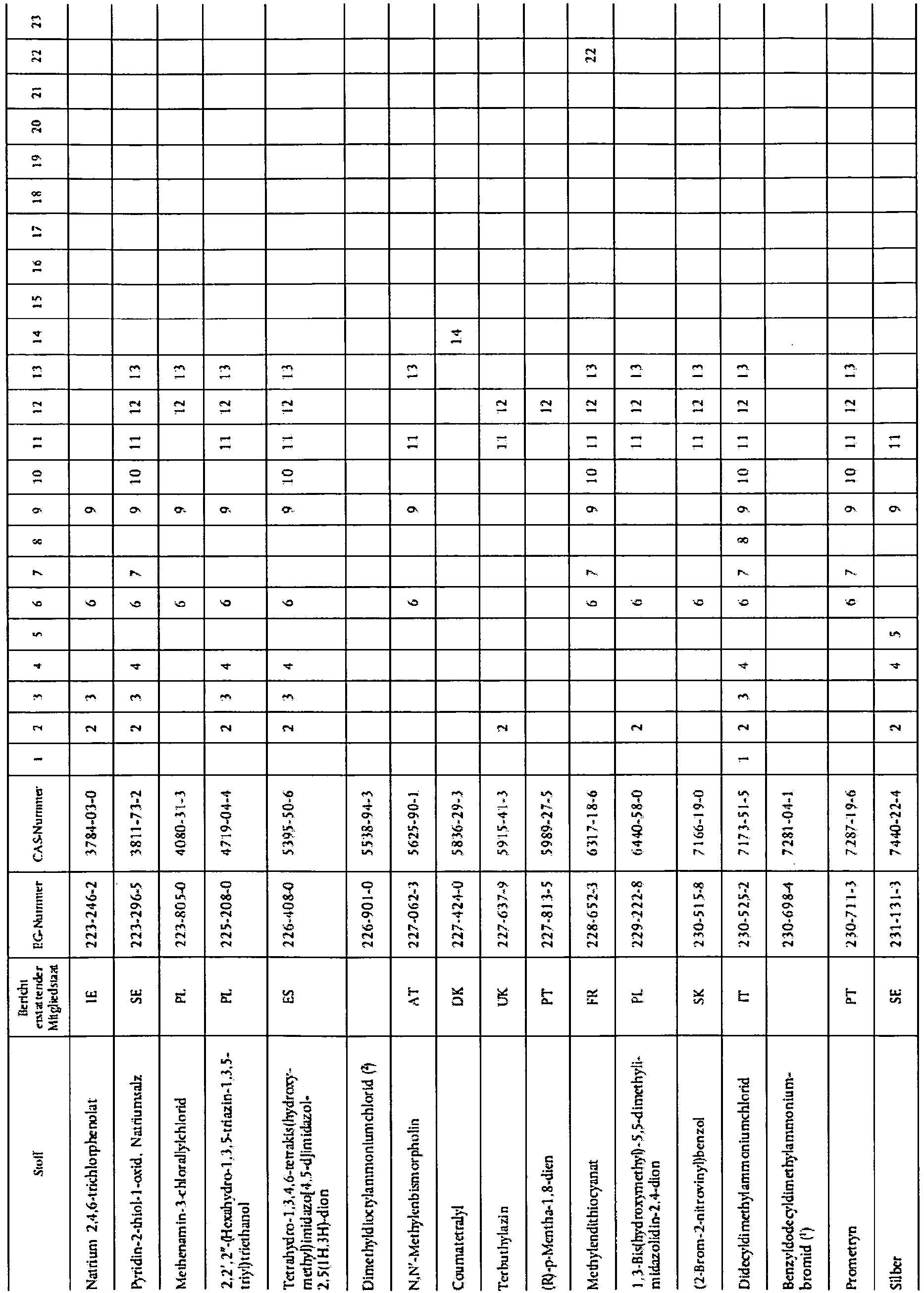

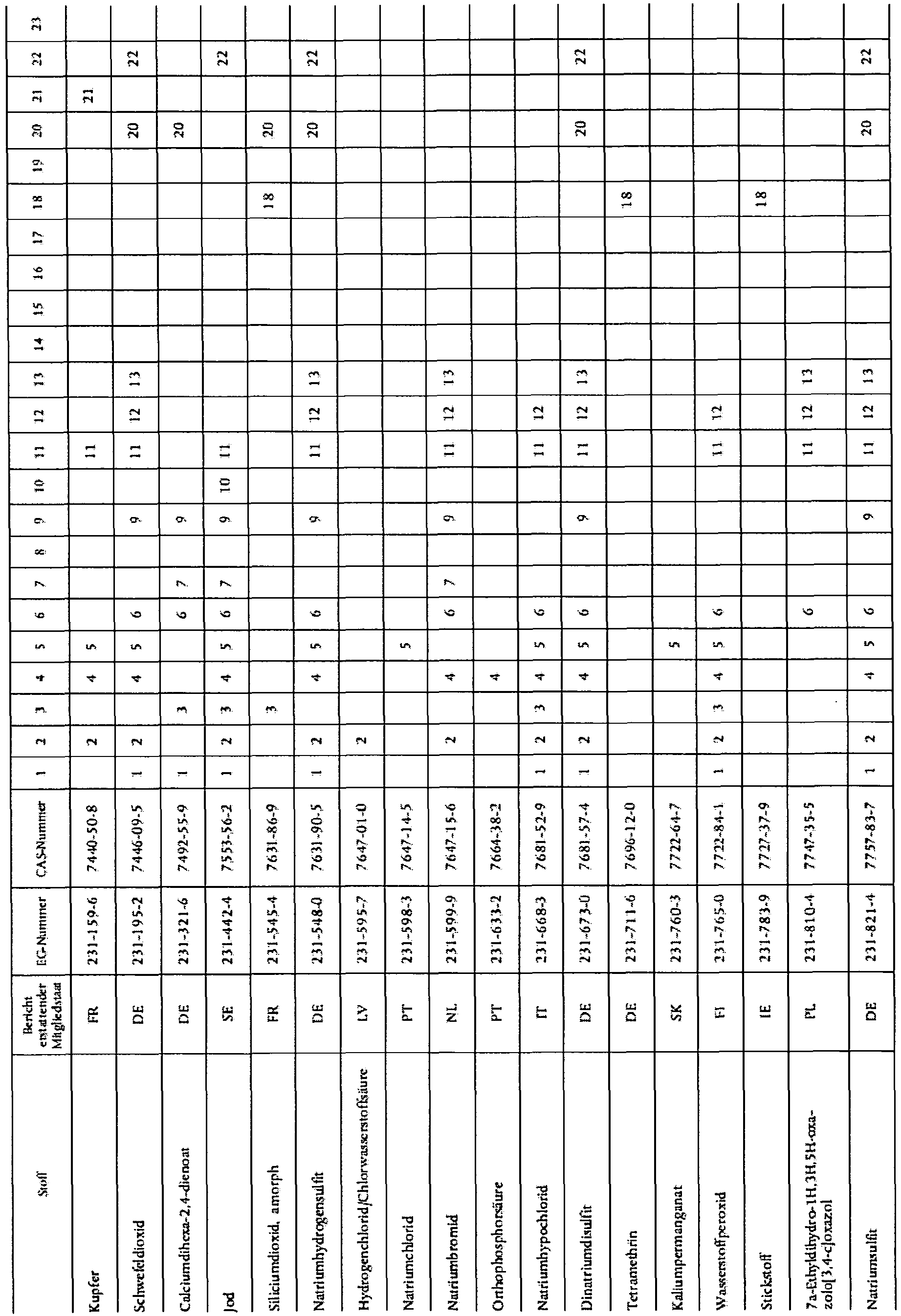

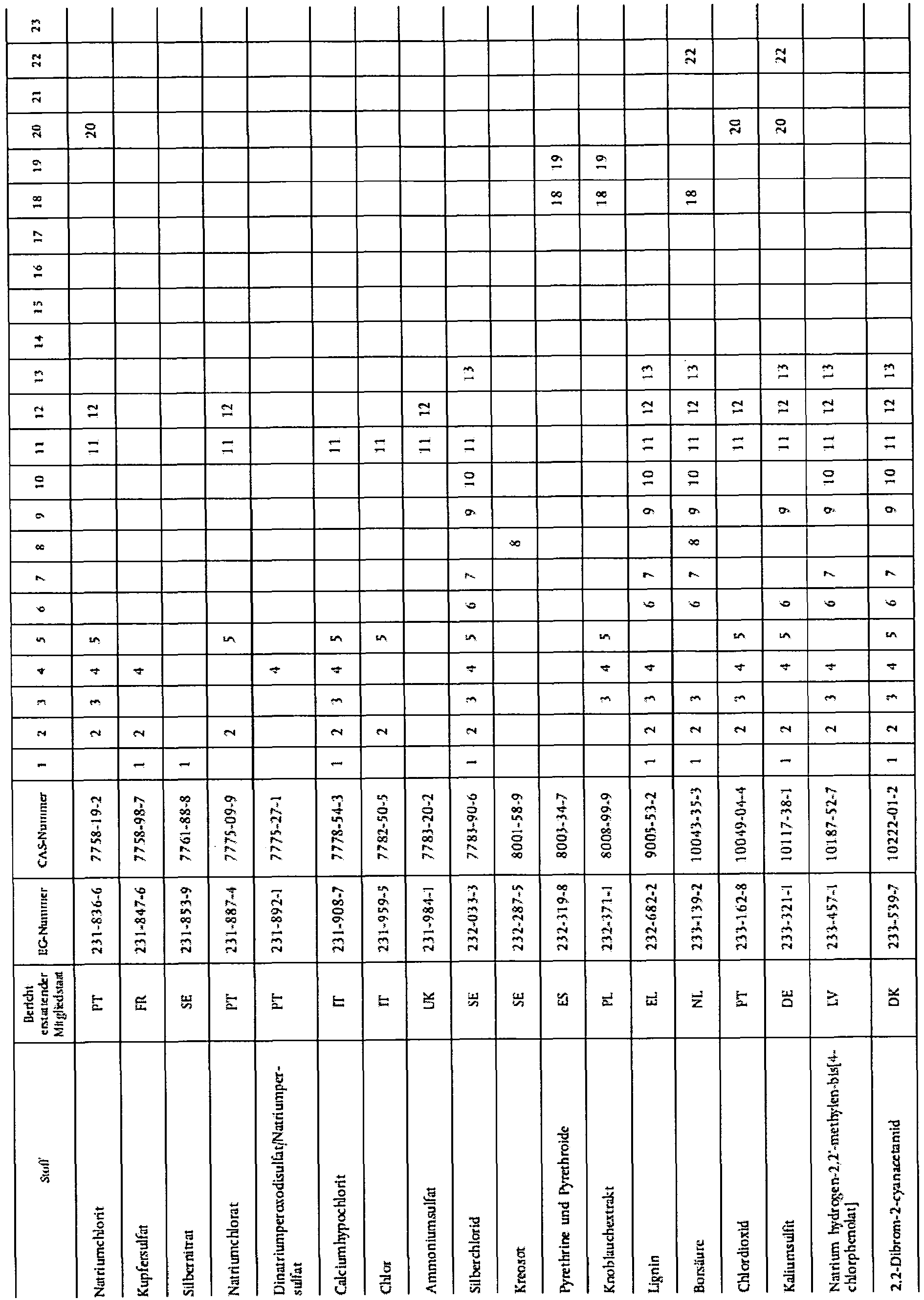

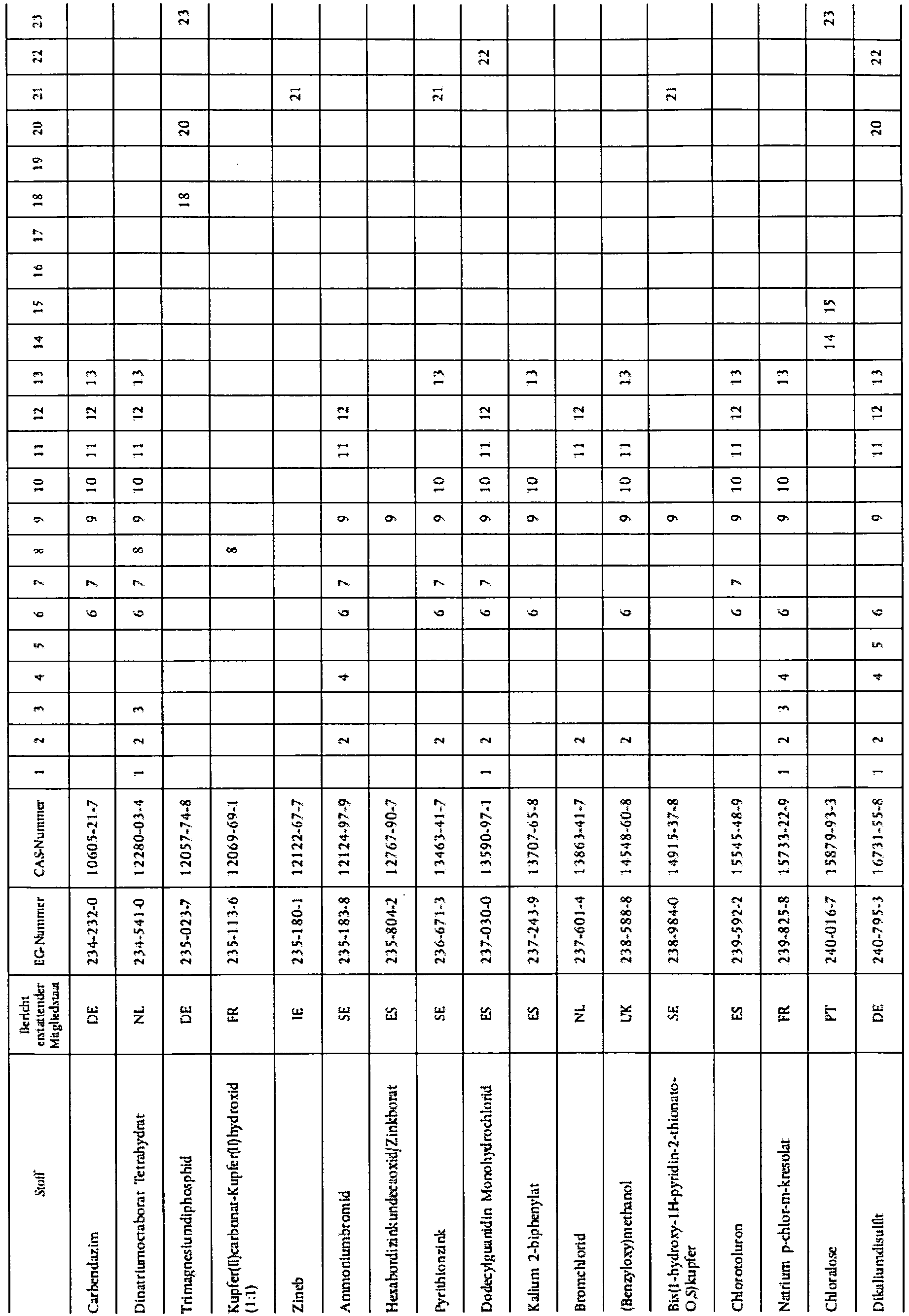

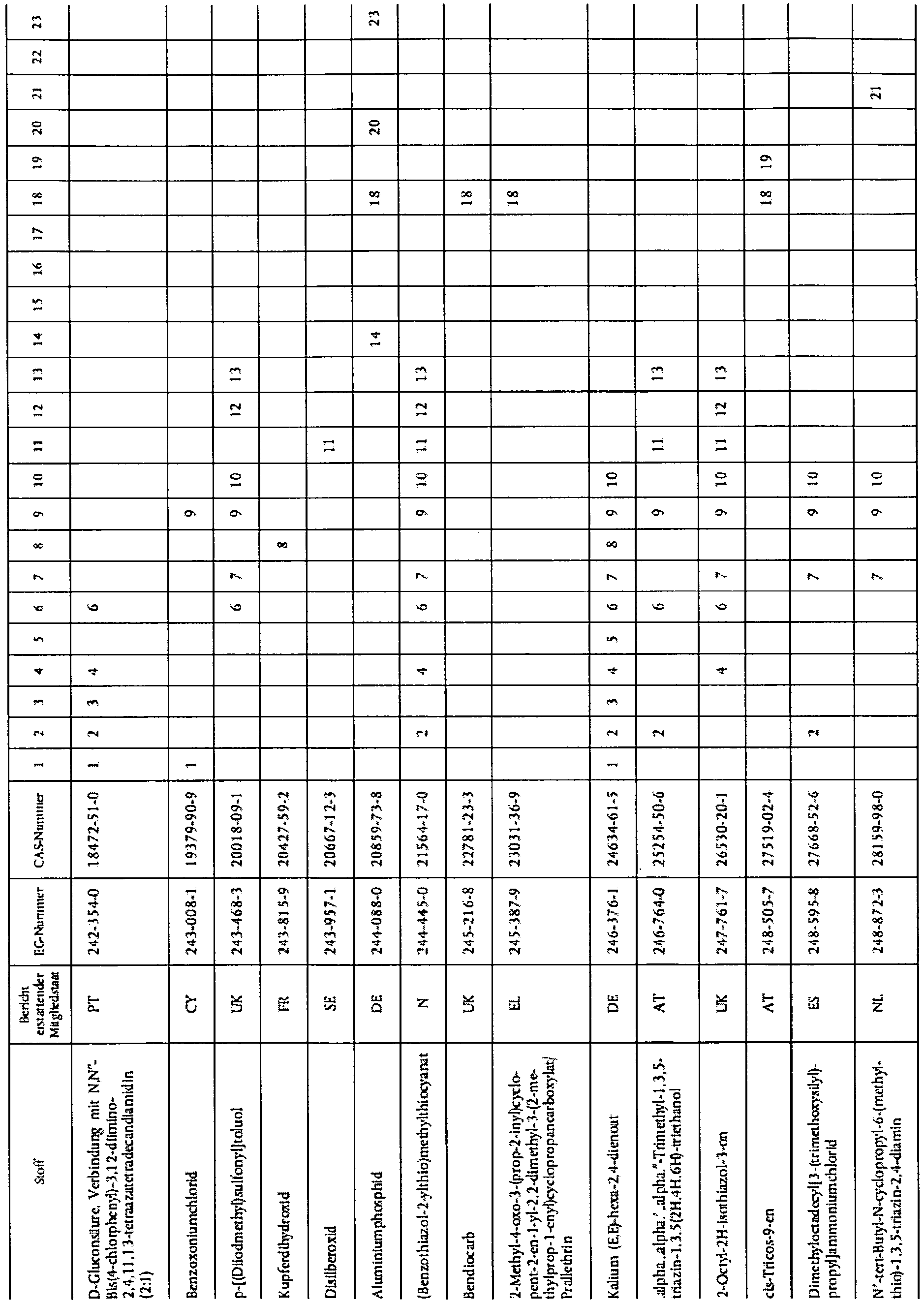

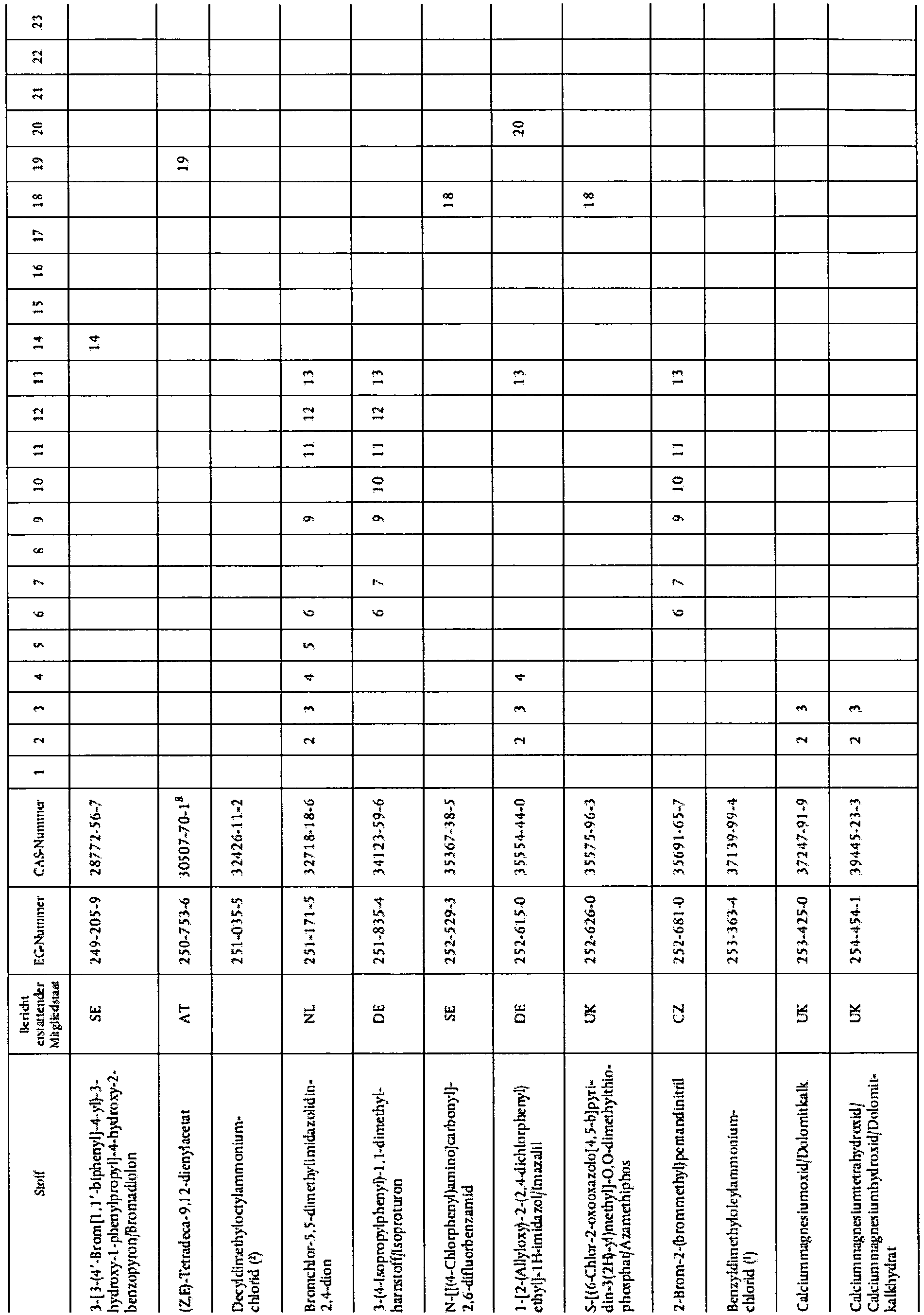

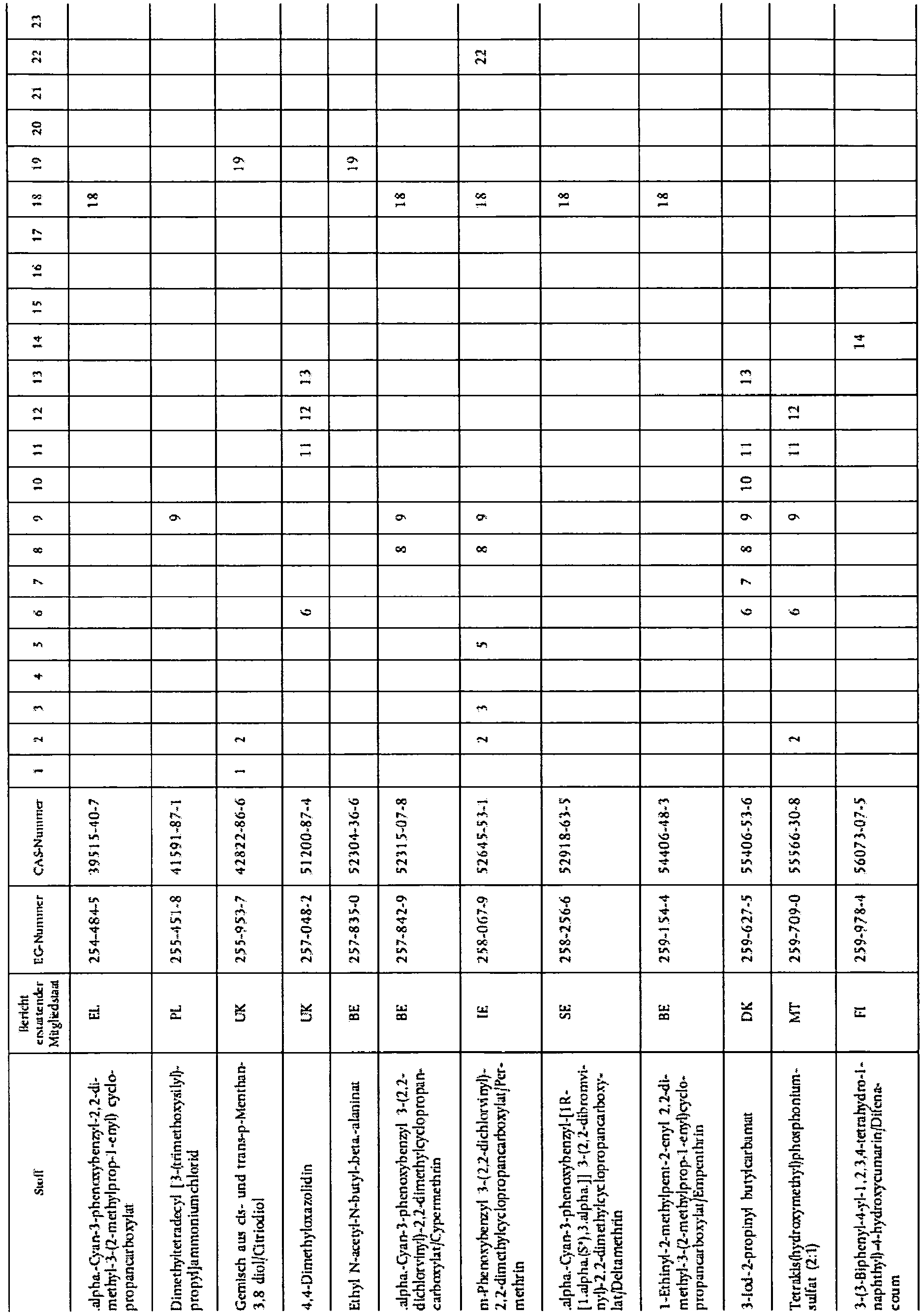

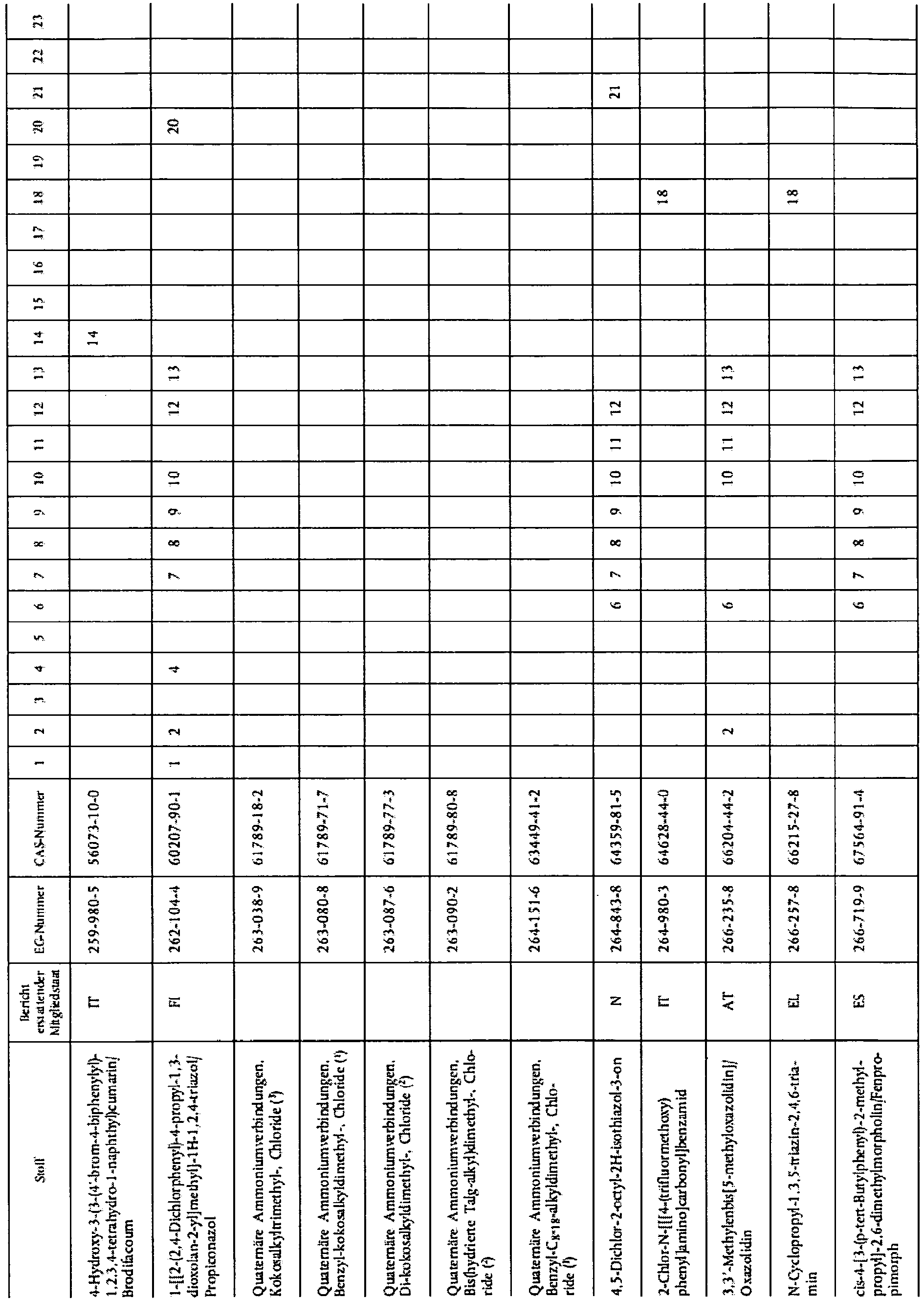

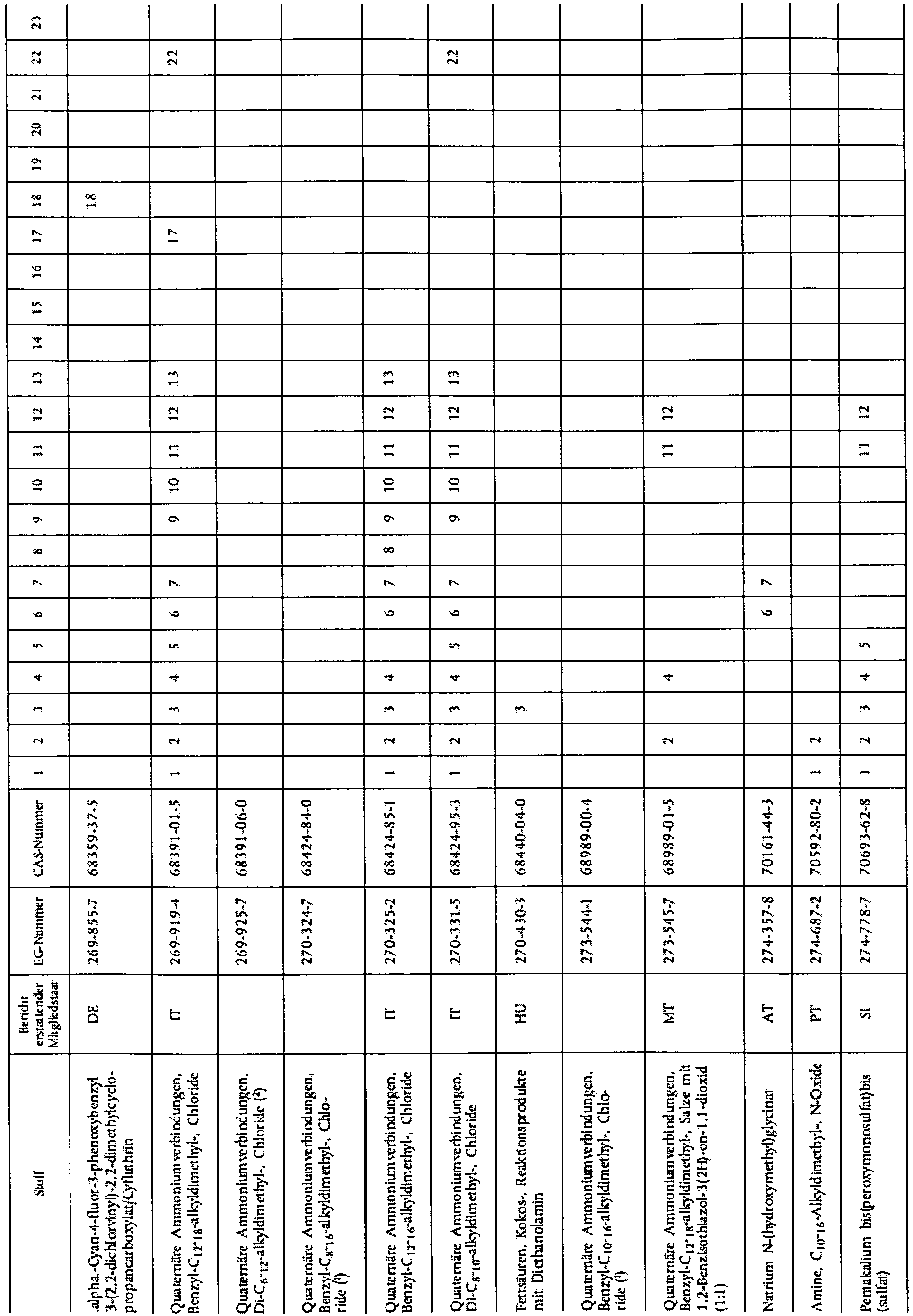

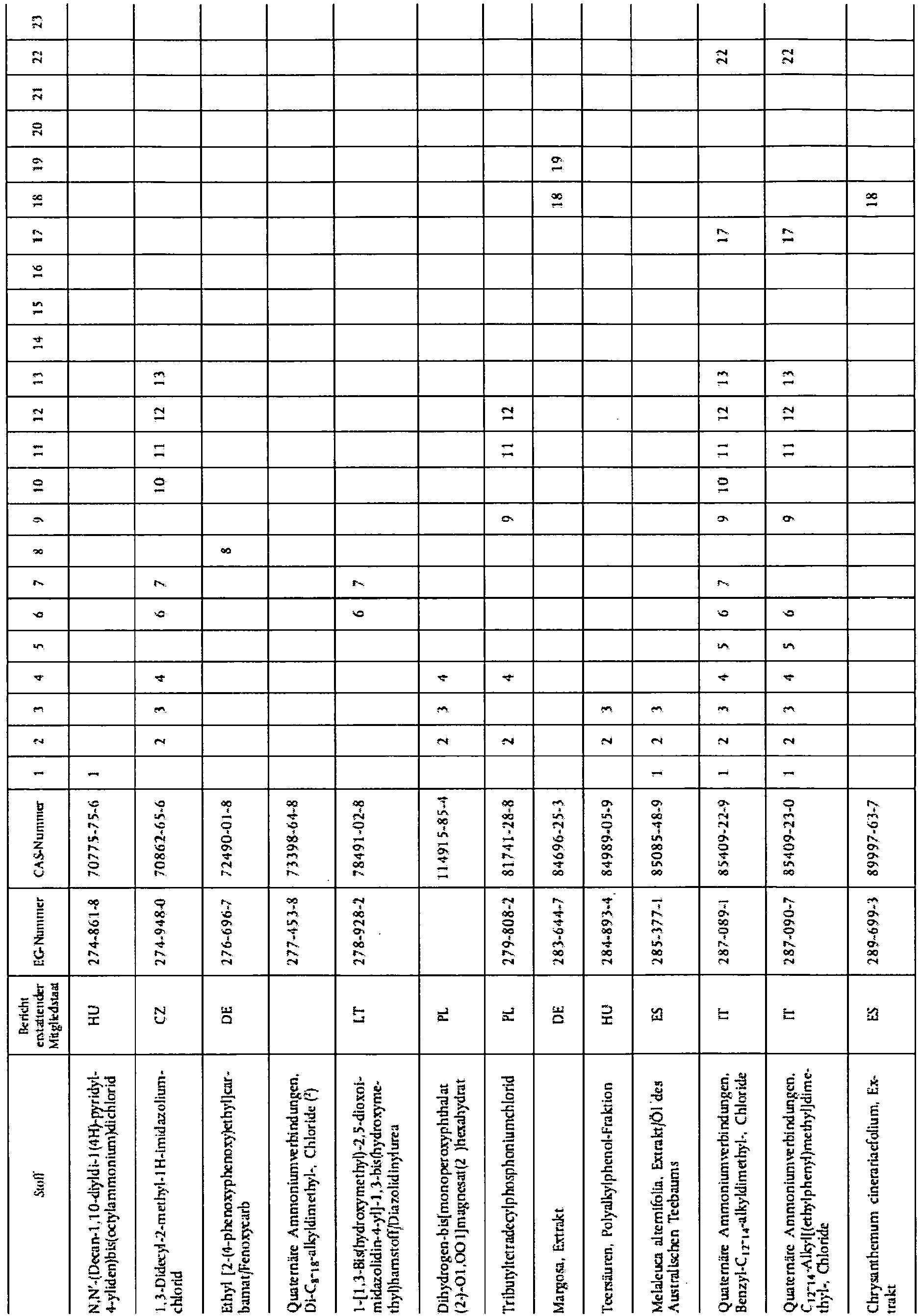

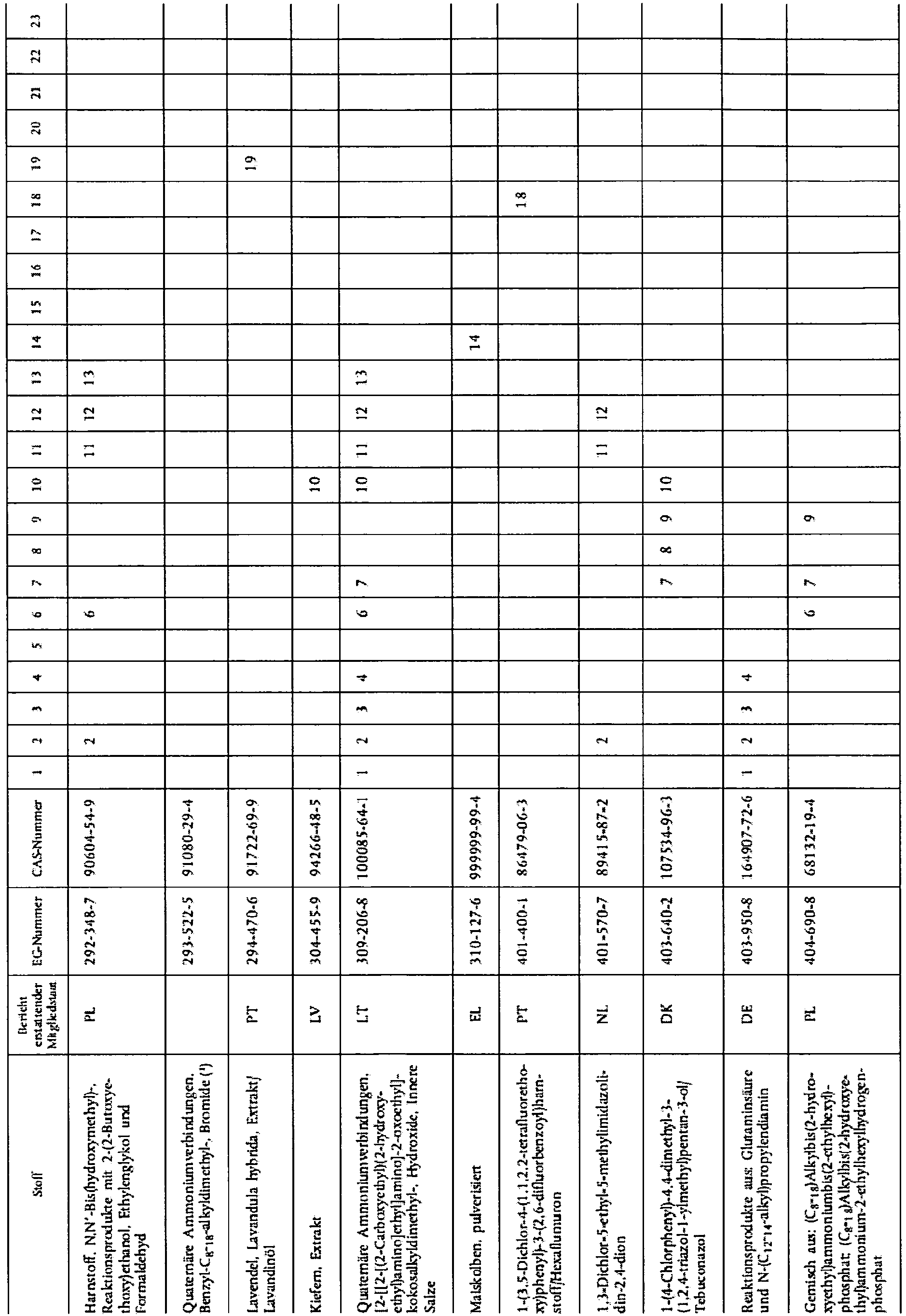

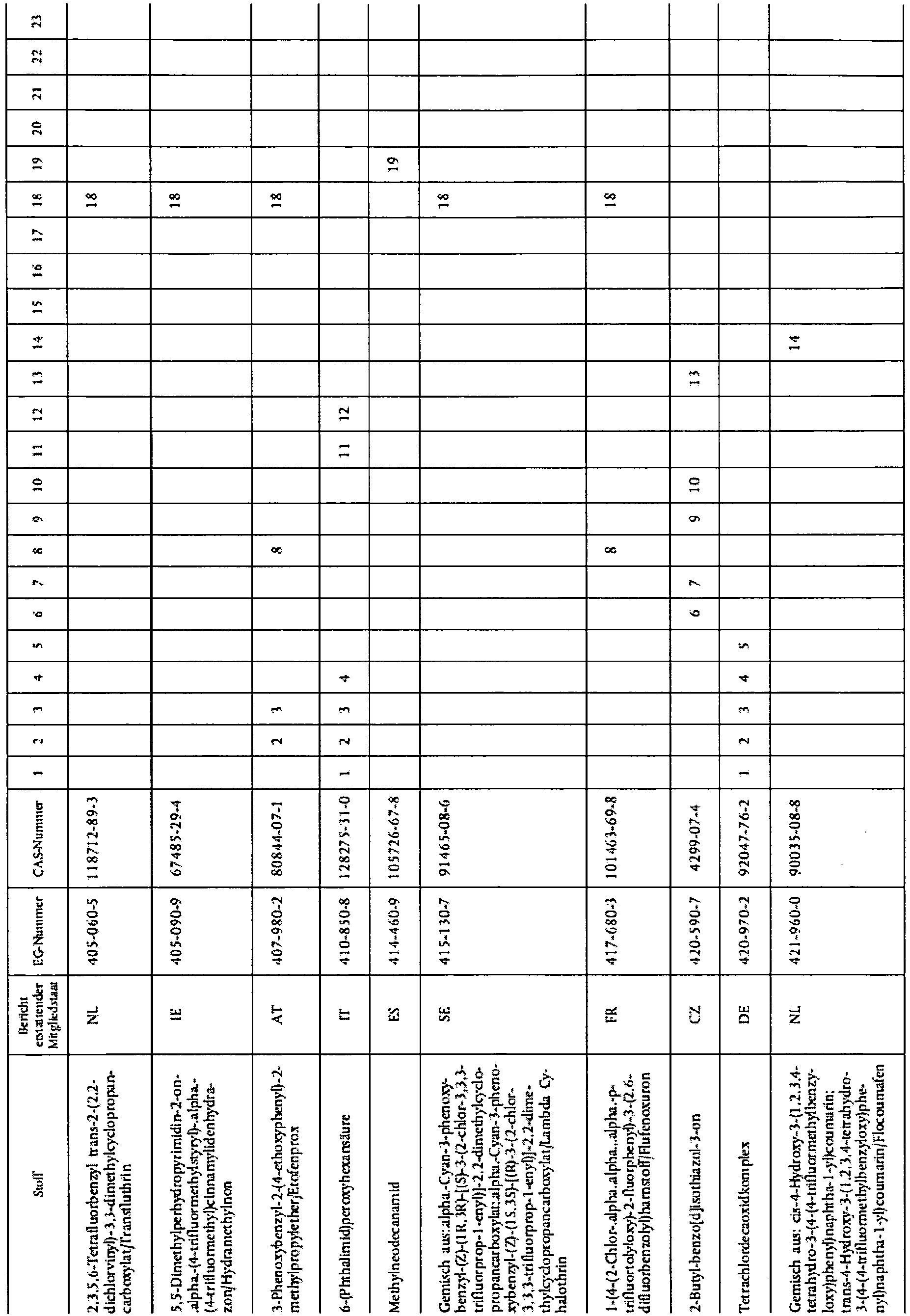

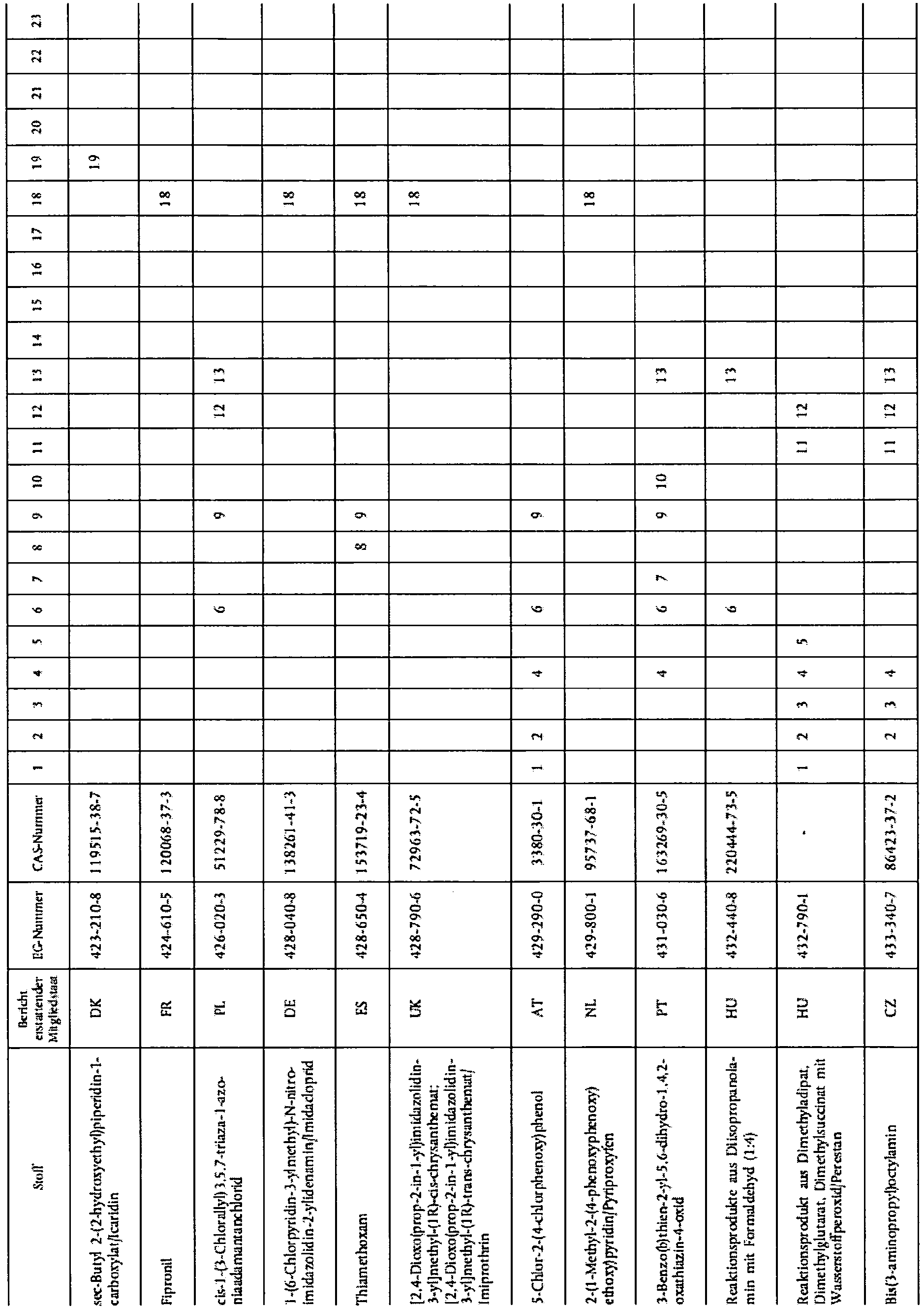

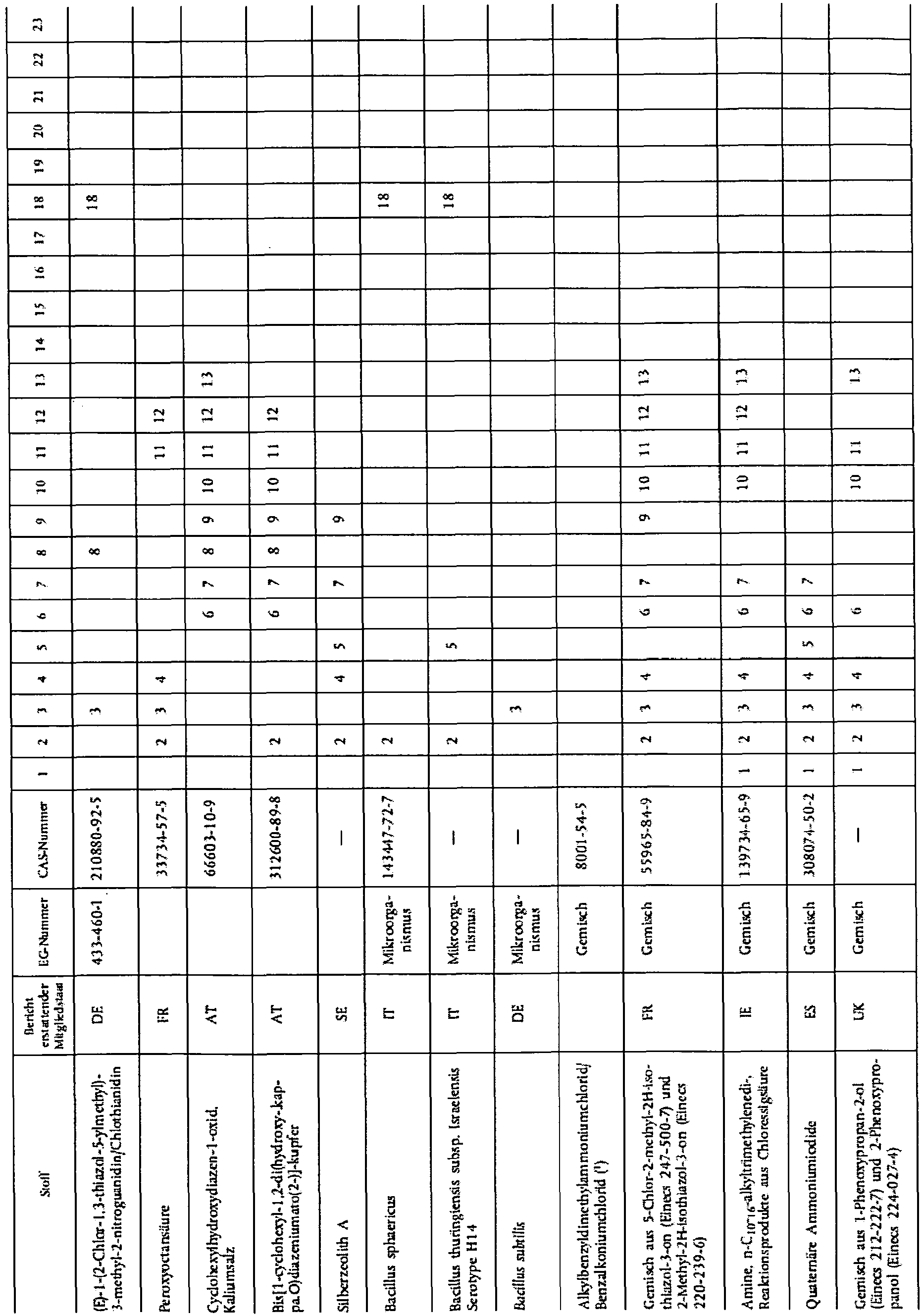

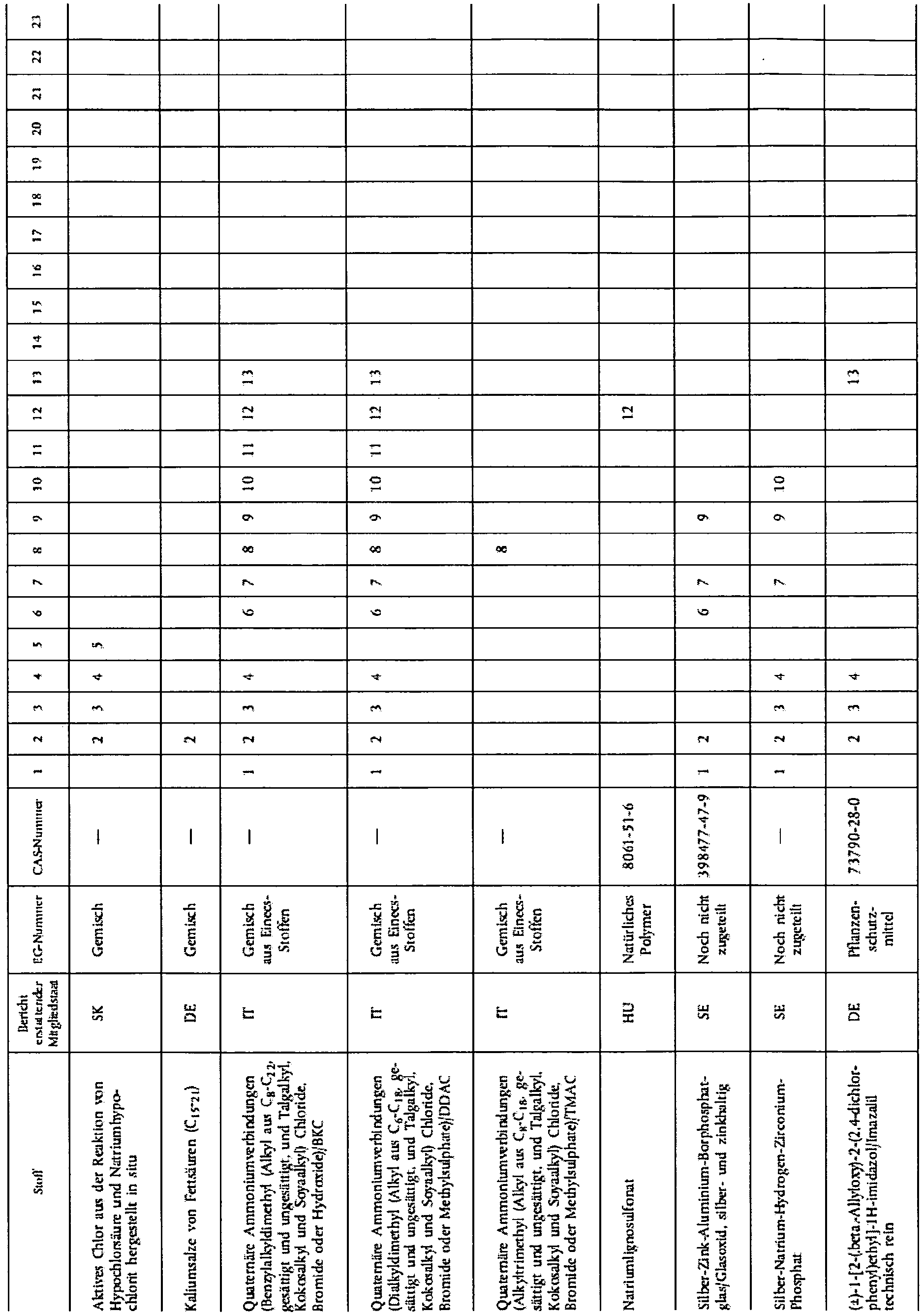

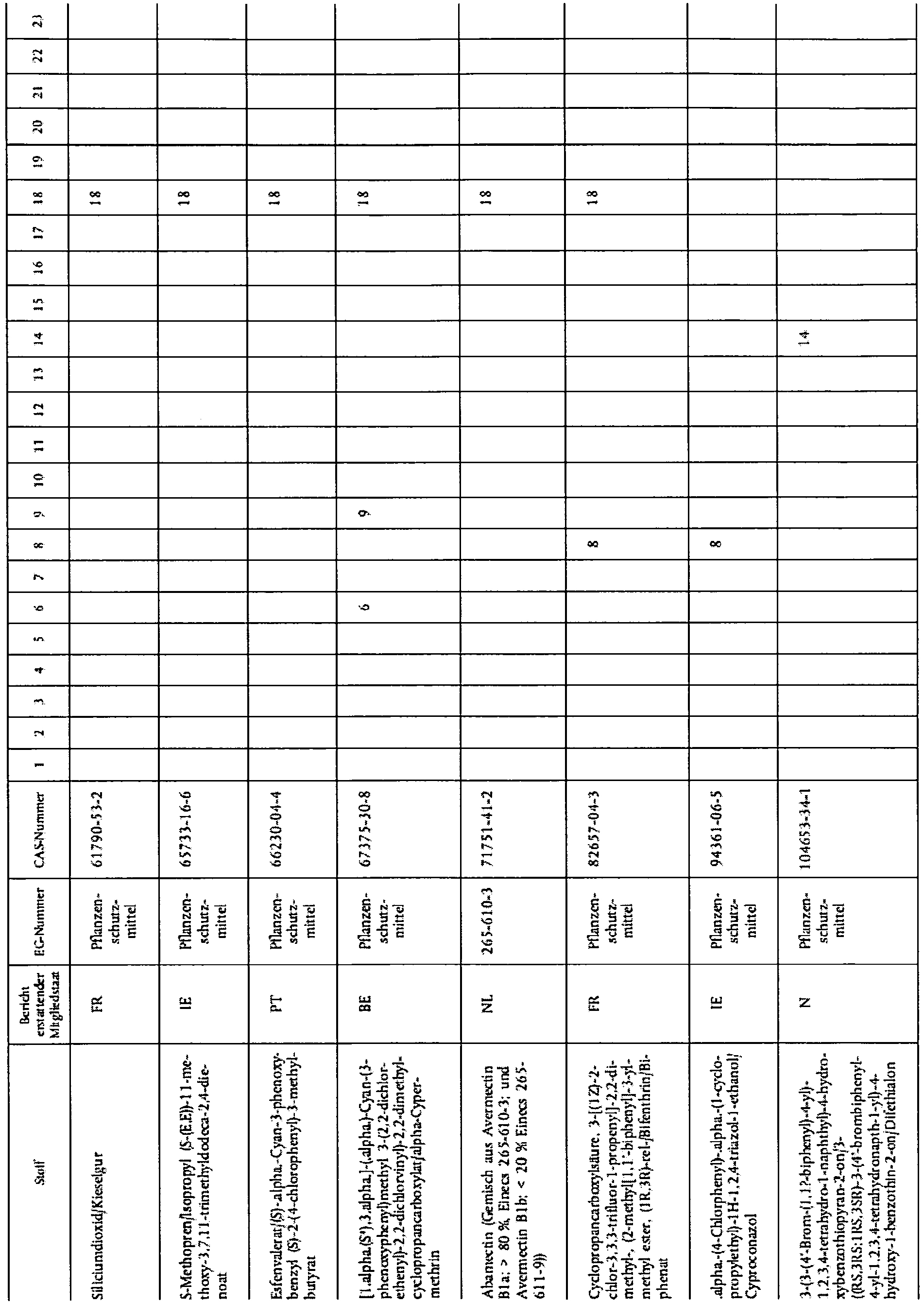

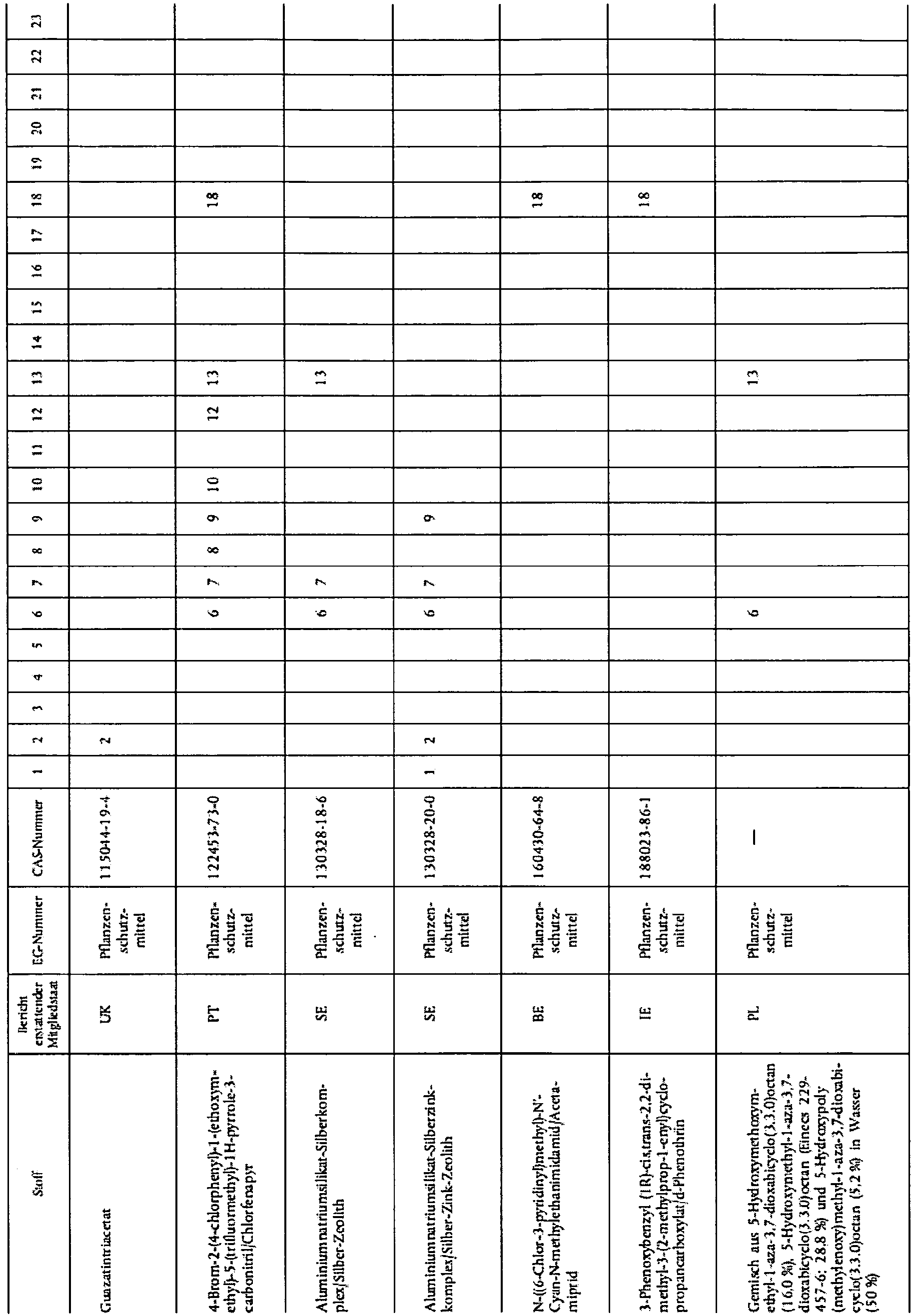

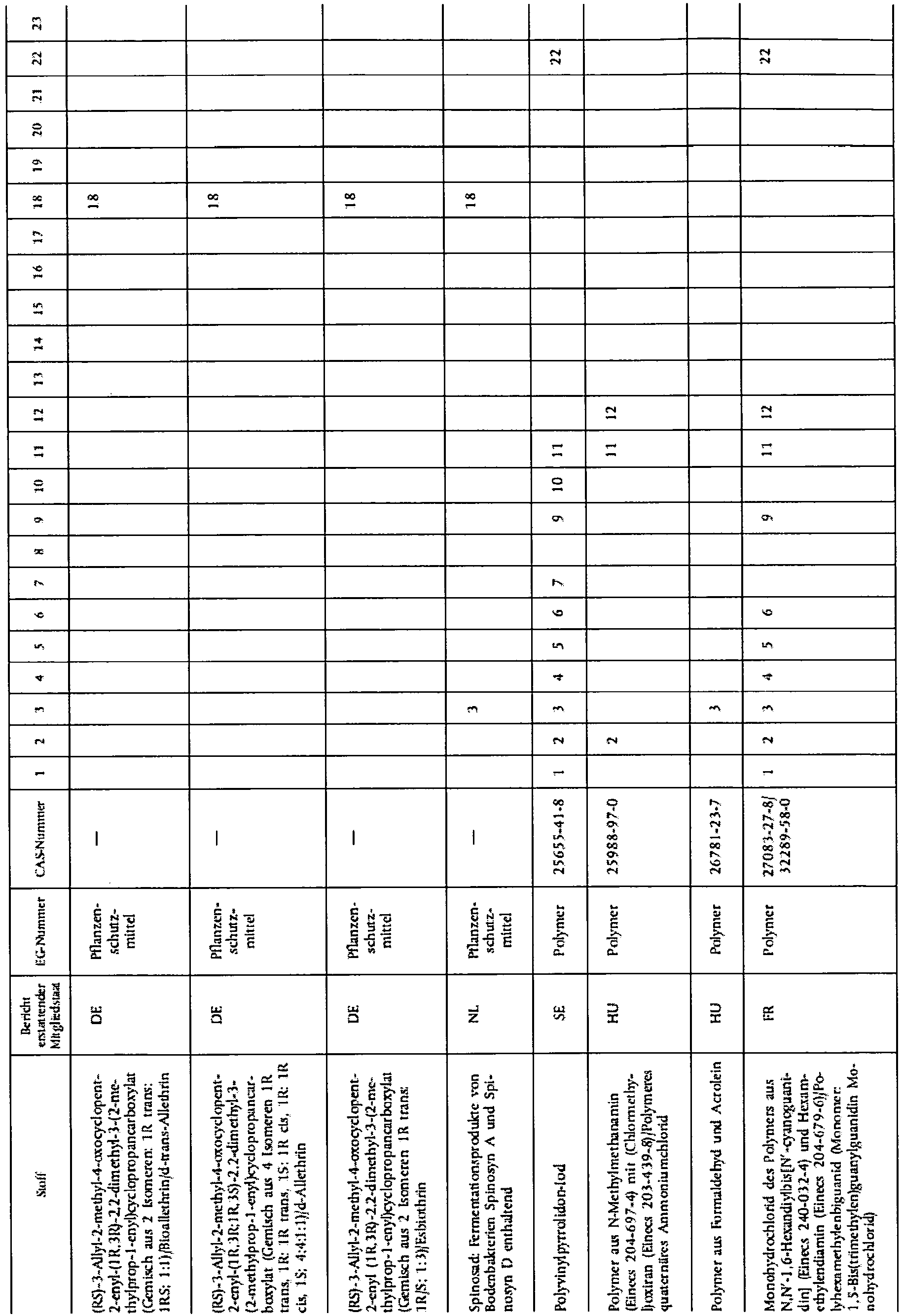

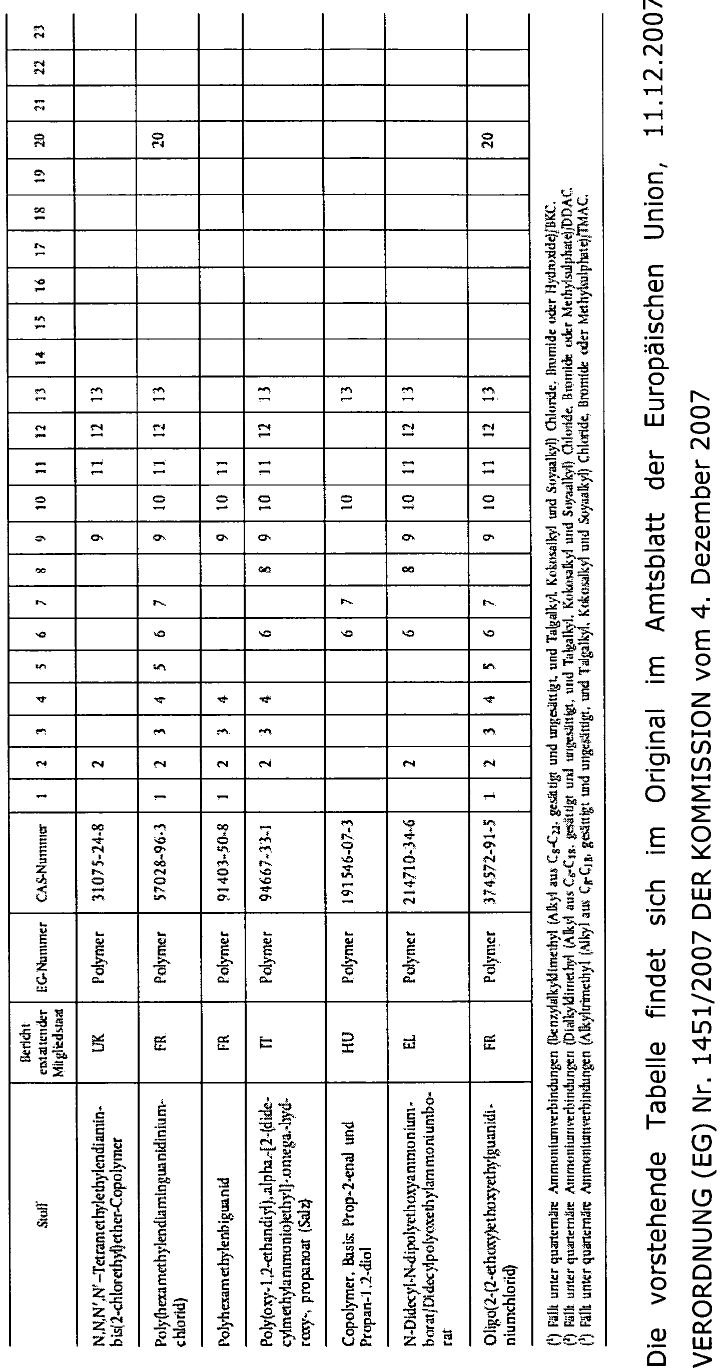

Diese antimikrobiellen Mitte! haben sich als besonders geeignet erwiesen, mit Hilfe einer Ausrüstung auf die Fasern aufgebracht zu werden, ohne den Luftwiderstand der Taschenfilter zu sehr zu erhöhen.

Das erfindungsgemäße Filtervlies hat vorzugsweise eine Dicke in einem Bereich von 0,5 bis 40 mm, insbesondere in einem Bereich von 1 bis 5 mm. Unterhalb dieses Bereiches wurde ein deutlicher Abfall der Staubspeicherfähigkeit festgestellt. Oberhalb dieses Bereiches nahm die Luftdurchlässigkeit deutlich ab.

Die Menge der aufgebrachten und getrockneten Ausrüstung beträgt weniger als 5 Gew.-%, bezogen auf das Gewicht des unbehandelten Filtervlieses.

Die Staubspeicherfähigkeit des erfindungsgemäßen Filtervlieses gemäß DIN EN 779:2005 liegt beispielsweise in einem Bereich von 10 bis 2000 g/m². Die Luftdurchlässigkeit des erfindungsgemäßen Filtervlieses gemäß IDLCL 406 liegt beispielsweise in einem Bereich von 100 bis 12.000 l m⁻² s⁻¹ bei 200 Pa.

Der Oberflächenwiderstand des erfindungsgemäßen Filtervlieses beträgt gemäß DIN EN 61340 beispielsweise bis zu maximal 10⁹ Ω/m, bevorzugt weniger als 10⁸ Ω/m. Die Brandschutzklasse des erfindungsgemäßen Filtervlieses gemäß DIN EN 13501 beträgt wenigstens B.

In einer weiteren Ausführungsform wird die der Erfindung zugrundeliegende Aufgabe gelöst durch ein Verfahren zur Herstellung eines erfindungsgemäßen Speicherfiltervlieses für die allgemeine Raum- und Prozesslufttechnik, gemäß Anspruch 7.

Im Unterschied zu bisherigen Versuchen des Standes der Technik, bei denen Antistatikmittel, antimikrobielles Mittel und/oder Flammschutzmittel in verhältnismäßig dicken Schichten beispielsweise in Form von Schäumen auf Filter aufgebracht wurden oder bei denen die Antistatikmittel, antimikrobielles Mittel und/oder Flammschutzmittel in das Material des Filtervlieses selbst eingebaut wurden, wurde bei der vorliegenden Erfindung überraschenderweise gefunden, dass eine ganz übliche Ausrüstung aus der Textiltechnologie bei ganz bestimmten Vliesen geeignet ist, aus den so behandelten Vliesen beispielsweise Taschenfilter für Raum- und Prozesslufttechnische Anlagen herzustellen, die aufgrund ihres geringen Anfangsdruckabfalls und des geringen Luftwiderstands hervorragend für diese Anwendungen geeignet sind.

Beispielsweise kann der Anfangsdruckabfall gemäß DIN EN 779:2005 bis zu 200, insbesondere höchstens 400 Pa betragen.

Vorzugsweise setzt man das Antistatikmittel, das antimikrobielle Mittel und/oder das Flammschutzmittel für die Ausrüstung in einer wässrigen Dispersion und/oder wässrigen Lösung ein. Dies hat zum einen den Vorteil, dass das erfindungsgemäße Verfahren wesentlich eher strengen Umweltrichtlinien gerecht werden kann und sich zum anderen sehr günstig durchführen lässt.

Das Filtervlies wird beim erfindungsgemäßen Verfahren vorteilhafterweise nach der Ausrüstung bei einer Temperatur in einem Bereich von 90 bis 150 °C getrocknet. Bei einer Temperatur oberhalb dieses Bereiches kann es zu Schäden zum einen bei der Ausrüstung selbst und bei den Fasern kommen. Bei einer Temperatur unterhalb dieses Bereiches wurde überraschend festgestellt, dass die Ausrüstung offenbar nicht gleichmäßig genug auf der Faser haften bleibt und zum einen zu einem verschlechterten Filterergebnis und zum anderen zu einem erhöhten Luftwiderstand des Filters führt.

In einer weiteren Ausführungsform wird die der Erfindung zu Grunde liegende Aufgabe gelöst durch die Verwendung eines stickstoffhaltigen Phosphorsalzes als Antistatikum.

### Ausführungsbeispiele:

### Vergleichsbeispiel 1

10 Gew.% der halogenfreien stickstoffhaltigen Phosphorverbindung Flovan ASN der Firma Huntsman wurde in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 6-10 g Trockenauflage je m² aufgebracht und anschließend bei etwa 125 °C für 3 min getrocknet. Die so entstandenen Filtermedien bestanden anschließend die Prüfung auf Entflammbarkeit nach DIN EN ISO 11925-2.

### Vergleichsbeispiel 2

10 Gew.% der Phosphorverbindung Flacavon FCE der Firma Schill & Seilacher wurde in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 6-10 g Trockenauflage je m² aufgebracht und anschließend bei etwa 125 °C für 3 min getrocknet. Die so entstandenen Filtermedien bestanden anschließend die Prüfung auf Entflammbarkeit nach DIN EN ISO 11925-2.

### Beispiel 1

1 Gew.% Polyethylenglykol und 2 Gew.% Natriumsalz des Phosphorsäureesters, nämlich Arkostat KR der Firma Clariant, wurden in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 1-3 g Trockenauflage je m² aufgebracht und anschließend bei etwa 125 °C für 3 min getrocknet. Die so entstandenen Filtermedien wurden anschließend auf ihre Oberflächenwiderstände hin mit einem Oberflächenwiderstandsprüfgerät Typ 7100 SRM110 der Firma Wolfgang Warmbier geprüft. Der Oberflächenwiderstand betrug 10⁷ Ohm/m Das unbehandelte Substrat hatte einen Oberflächenwiderstand von mehr als 10¹² Ohm/m.

### Beispiel 2

3 Gew.% Polyethylenglykol und 3 Gew.% Indiumzinnoxid mit einer Partikelgröße von etwa 5 bis 100 nm, nämlich AdNano ITO TC8 DE der Firma Evonik, wurden in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 4-8 g Trockenauflage je m² aufgebracht und anschließend bei etwa 125 °C für 3 min getrocknet. Die so entstandenen Filtermedien wurden anschließend auf ihre Oberflächenwiderstände hin mit einem Oberflächenwiderstandsprüfgerät Typ 7100 SRM110 der Firma Wolfgang Warmbier geprüft. Der Oberflächenwiderstand betrug 10⁸ Ohm/m Das unbehandelte Substrat hatte einen Oberflächenwiderstand von mehr als 10¹² Ohm/m.

### Beispiel 3

2 Gew.% Polyethylenglykol und 1 Gew.% Antimonzinnoxid, nämlich Nano ATO S44A der Firma Air Products, wurden in vollentsalztem Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 4-8 g Trockenauflage je m² aufgebracht und anschließend bei etwa 125 °C für 3 min getrocknet. Die so entstandenen Filtermedien wurden anschließend auf ihre Oberflächenwiderstände hin mit einem Oberflächenwiderstandsprüfgerät Typ 7100 SRM110 der Firma Wolfgang Warmbier GmbH geprüft. Der Oberflächenwiderstand betrug 10⁹ Ohm/m Das unbehandelte Substrat hatte einen Oberflächenwiderstand von mehr als 10¹² Ohm/m.

### Beispiel 4

10 Gew.% der halogenfreien stickstoffhaltigen Phosphorverbindung Flovan ASN der Firma Huntsman, 1 Gew.% Polyethylenglykol und 2 Gew.% Natriumsalz des Phosphorsäureesters, nämlich Arkostat KR der Firma Clariant, wurden in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 4-8 g Trockenauflage je m² aufgebracht und anschließend bei etwa 125 °C für 3 min getrocknet.

Die so entstandenen Filtermedien wurden anschließend auf ihre Oberflächenwiderstände hin mit einem Oberflächenwiderstandsprüfgerät Typ 7100 SRM110 der Firma Wolfgang Warmbier GmbH geprüft. Der Oberflächenwiderstand betrug 10⁷ Ohm/m. Das unbehandelte Substrat hatte einen Oberflächenwiderstand von mehr als 10¹² Ohm/m. Die so entstandenen Filtermedien bestanden auch die Prüfung auf Entflammbarkeit nach DIN EN ISO 11925-2.

### Vergleichsbeispiel 3

1 Gew.% des modifizierten Polyethers Statexan WP der Firma Tanatex wurden in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 1-2 g Trockenauflage je m² aufgebracht und anschließend bei etwa 125 °C für 3 min getrocknet. Die so entstandenen Filtermedien wurden anschließend auf ihre Oberflächenwiderstände hin mit einem Oberflächenwiderstandsprüfgerät Typ 7100 SRM110 der Firma Wolfgang Warmbier GmbH geprüft. Der Oberflächenwiderstand betrug 10¹¹ Ohm/m. Das unbehandelte Substrat hatte einen Oberflächenwiderstand von mehr als 10¹² Ohm/m.

### Vergleichsbeispiel 4

5 Gew. % der halogenfreien stickstoffhaltigen Phosphorverbindung Flovan® ASN der Firma Huntsman wurden zusammen mit 1 Gew. % Sanitzed® T 25-25 Silver in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 3 bis 5 g Trockenauflage je m² aufgebracht und anschließend bei etwa 120 °C für 3 min getrocknet.

Die so entstandenen Filtermedien bestanden anschließend die Prüfung auf antimikrobielle Eigenschaften bezüglich Bakterien und Pilze bzw. Hefen (Suspensionsmethode - siehe Anschluss an Beispiel 12) sowie die Prüfung auf Entflammbarkeit nach DIN EN ISO 11925-2.

### Vergleichsbeispiel 5

10 Gew. % der Phosphorverbindung Flacavon® FCE der Firma Schill & Seilacher wurden mit 1 Gew. % nanoCopper in Ethanol der Firma SDC materials, Inc. in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 6 bis 10 g Trockenauflage je m² aufgebracht und anschließend bei etwa 120 °C für 3 min getrocknet.

Die so entstandenen Filtermedien bestanden anschließend die Prüfung auf antimikrobielle Eigenschaften bezüglich Bakterien und Pilze bzw. Hefen (Suspensionsmethode - siehe **Vergleichsbeispiel 4**) sowie die Prüfung auf Entflammbarkeit nach DIN EN ISO 11925-2.

### Vergleichsbeispiel 6

1 Gew. % Acticide^{®} MKE-N der Firma Thor wurde mit 5 Gew. % der halogenfreien stickstoffhaltigen Phosphorverbindung Flovan® ASN der Firma Huntsman in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 2 bis 5 g Trockenauflage je m² aufgebracht und anschließend bei etwa 120 °C für 3 min getrocknet.

Die so entstandenen Filtermedien bestanden anschließend die Prüfung auf antimikrobielle Eigenschaften bezüglich Bakterien und Pilze bzw. Hefen (Suspensionsmethode - siehe **Vergleichsbeispiel 4**) sowie die Prüfung auf Entflammbarkeit nach DIN EN ISO 11925-2.

### Vergleichsbeispiel 7

1 Gew. % permaProtect^{®} TEX 502 der Nanogate AG wurden mit 5 Gew. % der halogenfreien stickstoffhaltigen Phosphorverbindung Flovan ASN der Firma Huntsman in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 2-5 g Trockenauflage je m² aufgebracht und anschließend bei etwa 120 °C für 3 min getrocknet.

Die so entstandenen Filtermedien bestanden anschließend die Prüfung auf antimikrobielle Eigenschaften bezüglich Bakterien und Pilze bzw. Hefen (Suspensionsmethode - siehe **Vergleichsbeispiel 4**) sowie die Prüfung auf Entflammbarkeit nach DIN EN ISO 11925-2.

### Vergleichsbeispiel 8

1 Gew. % permaProtect^{®} TEX 502 der Nanogate AG wurde in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 0,3 bis 1,0 g Trockenauflage je m² aufgebracht und anschließend bei etwa 100 °C für 3 min getrocknet.

Die so entstandenen Filtermedien bestanden anschließend die Prüfung auf antimikrobielle Eigenschaften bezüglich Bakterien und Pilze bzw. Hefen (Suspensionsmethode - siehe **Vergleichsbeispiel 4**).

### Vergleichsbeispiel 9

1 Gew. % Acticide^{®} MKE-N der Firma Thor wurde in Wasser gelöst. Die Lösung wurde per Foulard-Applikation auf ein Medium aus Polypropylen/Polyester Spinnvlies (F5 bis F8 nach EN779:2002) und einer weiteren Schicht aus kardiertem Faservlies (Polyester) mit einem Gesamt-Flächengewicht von etwa 200 g/m² (nach EN 29073-1) in einer Menge von 0,3 bis 1,0 g Trockenauflage je m² aufgebracht und anschließend bei etwa 100 °C für 3 min getrocknet.

Die so entstandenen Filtermedien bestanden anschließend die Prüfung auf antimikrobielle Eigenschaften bezüglich Bakterien und Pilzen bzw. Hefen (Suspensionsmethode - siehe **Vergleichsbeispiel 4**).

### Erläuterung, Bedingungen und Ergebnisse zur Suspensionsmethode

### Prüforganismen

- Candida albicans (Robin) Berkhout ATCC 10231
- Staphylococcus aureus subsp. aureus Rosenbach ATCC 6538
- Legionella pneumophilia subsp. pneumophilia ATCC 33152

### Anzucht der Prüforganismen

Die Anzucht von Candida albicans erfolgte im 50 ml Falcon tube (15 ml Malzextrakt-Bouillon, 36 °C, 200 UpM).
Die Anzucht von St. aureus erfolgte analog in CASO-Bouillon. Legionella pneumophilia wurde auf GVPC-Selektiv-Agar angezüchtet.

### Suspensionsmethode

Zur Überprüfung der antimikrobiellen Wirkung im belasteten Zustand wurde folgender Test durchgeführt:
Jeweils zwei 2 x 2 cm große Vliesstücke werden in einem Reagenzglas (160 x 16) mit 4 ml einer Suspension des Prüfkeims Candida albicans / Staphylococcus aureus in einem Nährmedium (Malzextrakt-Bouillon, CASO-Buillon) versetzt (Keimdichte: ca. 7 x 10⁵ KBE/ml). Legionellen wurden in physiologischer NaCl-Lösung suspendiert. Die Inkubation der Ansätze erfolgt bei 25 °C.

Nach t = 0h, 3h und 24h werden nach gründlicher Durchmischung 100µl des Prüfgemisches entnommen, eine dezimale Verdünnungs-reihe angelegt und 100 µl der Verdünnungen 10⁻² und 10⁻³ (nach 0h und 3h) bzw. 10⁰ und 10⁻² (nach 24h) auf Agarplatten (Candida: Malzextrakt-Agar, Staphylococcus: CASO-Agar, Legionella: GVPC-Agar) ausplattiert (pro Verdünnungsstufe 2 Parallelplatten). Die Platten werden 48 - 72 h, Legionella 7 Tage bei 36 °C bebrütet. Anschließend erfolgte die Auszählung der Kolonien.

### Ergebnisse

Bei allen Prüforganismen war bei t = 0 die Anzahl der KBE/ml > 10³. Die Suspensionsmethode gilt als bestanden, wenn nach t = 24 h die Anzahl der KBE/ml unterhalb der Nachweisgrenze (< 5) ist, was bei allen Prüforganismen der Fall war.

## Patentansprüche

1. Speicherfiltervlies für die allgemeine Raum- und Prozesslufttechnik, insbesondere für Taschenfilter von Klimaanlagen, **dadurch gekennzeichnet, dass** das Filtervlies
- ein Flächengewicht in einem Bereich von 50 bis 500 g/m² aufweist,
- wenigstens 60 Gew.% Fasern aus Polyolefin und/oder Polyester enthält,
- einen Anfangsdruckabfall gemäß DIN EN 779:2005 von höchstens 400 Pa aufweist,
- eine Dicke in einem Bereich von 0,5 bis 40 mm aufweist, und
- mit einer Ausrüstung, wobei die Menge der aufgebrachten und getrockneten Ausrüstung weniger als 5 Gew.%, bezogen auf das Gewicht des unbehandelten Filtervlieses beträgt, umfassend eine nasschemische Behandlung versehen ist, die ausgewählt ist aus
(a) Antistatikmittel, Flammschutzmittel und antimikrobiellem Mittel,
(b) Antistatikmittel und Flammschutzmittel,
(c) Antistatikmittel und antimikrobiellem Mittel oder
(d) Antimikrobiellem Mittel und Flammschutzmittel,
**dadurch gekennzeichnet, dass** auf/im Taschenfilter eine Menge von 0,01 bis 3 Gew.-% Oligo- und/oder Polyethylenglykol, bezogen auf das Gewicht des ausgerüsteten Filters, vorliegt, wobei dieses Oligo- und/oder Polyethylenglykol Bestandteil des Flammenschutzmittels und/oder Antistatikmittels ist.

2. Filtervlies gemäß Anspruch 1, **dadurch gekennzeichnet, dass** das Filtervlies wenigstens zweilagig ist, insbesondere auch mindestens dreilagig wobei eine Lage Spinnvlies mit einem Flächengewicht in einem Bereich von 10 bis 50 g/m² an eine Lage schmelzgeblasenes Vlies mit einem Flächengewicht in einem Bereich von 3 bis 80 g/m² angrenzt, an die wiederum eine Lage aus trockengelegtem Vlies mit einem Flächengewicht in einem Bereich von 50 bis 250 g/m² angrenzt.

3. Filtervlies gemäß Anspruch 1 oder 2, **dadurch gekennzeichnet, dass** das Flammschutzmittel ausgewählt ist aus der Gruppe Ammoniumverbindungen, Phosphor-Stickstoff-Verbindungen, Phosphorsäureester und deren Salze, Blähgraphit, polybromierte Diphenylether, polybromierte Diphenyle, Chlorparaffine, Tetrabrombisphenol A und/oder Hexabromcyclododecan.

4. Filtervlies gemäß einem der Ansprüche 1 bis 3, **dadurch gekennzeichnet, dass** das Antistatikmittel ausgewählt ist aus der Gruppe langkettige, aliphatische Amine und Amide, Ammoniumverbindungen, Zinnmischoxide, Phosphorsäureester und deren Salze.

5. Filtervlies gemäß einem der Ansprüche 1 bis 4, **dadurch gekennzeichnet, dass** das Flammschutzmittel und/oder das Antistatikmittel eine Kombination aus einem stickstoffhaltigen Phosphorsalz und wenigstens einer weiteren Phosphorverbindung ist.

6. Filtervlies gemäß einem der Ansprüche 1 bis 5, **dadurch gekennzeichnet, dass** die Dicke in einem Bereich von 1 bis 5 mm liegt.

7. Verfahren zur Herstellung eines Speicherfilters für die allgemeine Raum- und Prozesslufttechnik, insbesondere für Taschenfilter von Klimaanlagen aus einem Speicherfiltervlies gemäß einem der Ansprüche 1 bis 6, **dadurch gekennzeichnet, dass** man das Filtervlies
- mit einem Flächengewicht in einem Bereich von 50 bis 500 g/m²,
- das wenigstens 60 Gew.% Fasern aus Polyolefinen und/oder Polyester enthält,
- mit einen Anfangsdruckabfall gemäß DIN EN 779:2005 von höchstens 400 Pa,
nasschemisch mit
(a) Antistatikmittel, Flammschutzmittel und antimikrobiellem Mittel,
(b) Antistatikmittel und Flammschutzmittel,
(c) Antistatikmittel und antimikrobiellem Mittel oder
(d) Antimikrobiellem Mittel und Flammschutzmittel, ausrüstet,
wobei die Menge der aufgebrachten und getrockneten Ausrüstung weniger als 5 Gew.%, bezogen auf das Gewicht des unbehandelten Filtervlieses beträgt, **dadurch gekennzeichnet, dass** auf/im Taschenfilter eine Menge von 0,01 bis 3 Gew.-% Oligo- und/oder Polyethylenglykol, bezogen auf das Gewicht des ausgerüsteten Filters, vorliegt, wobei dieses Oligo- und/oder Polyethylenglykol Bestandteil des Flammenschutzmittels und/oder Antistatikmittels.

8. Verfahren gemäß Anspruch 7, **dadurch gekennzeichnet, dass** man das Antistatikmittel und/oder das Flammschutzmittel und/oder das antimikrobielle Mittel für die Ausrüstung in einer wässrigen Dispersion und/oder wässrigen Lösung einsetzt.

9. Verfahren gemäß Anspruch 7 oder 8, **dadurch gekennzeichnet, dass** man das Filtervlies nach der Ausrüstung bei einer Temperatur in einem Bereich von 90 bis 150 °C trocknet.

## Claims

1. A nonwoven storage filter for general room and process ventilation technology, especially for bag filters of air conditioning systems, **characterized in that** said nonwoven filter
- has a weight per surface area within a range of from 50 to 500 g/m²;
- contains at least 60% by weight of fibers of polyolefin and/or polyester;
- has an initial pressure drop according to DIN EN 779:2005 of at most 400 Pa;
- has a thickness within a range of from 0.5 to 40 mm; and
- is provided with a finish, wherein the amount of finishing agent applied and dried on is less than 5% by weight, based on the weight of the untreated nonwoven filter, comprising a wet chemical treatment, selected from
(a) antistatic agent, flame retardant and antimicrobial agent;
(b) antistatic agent and flame retardant;
(c) antistatic agent and antimicrobial agent; or
(d) antimicrobial agents and flame retardants;
**characterized in that** an amount of from 0.01 to 3% by weight oligo- and/or polyethylene glycol is present on/in the bag filter, based on the weight of the finished filter, wherein said oligo- and/or polyethylene glycol is a component of said flame retardant and/or antistatic agent.

2. The nonwoven filter according to claim 1, **characterized in that** said non-woven filter has at least two layers, especially at least three layers, wherein a layer of spun-bonded web with a weight per surface area within a range of from 10 to 50 g/m² is adjacent to a layer of melt-blown non-woven with a weight per surface area within a range of from 3 to 80 g/m², which is in turn adjacent to a layer of dry-laid non-woven with a weight per surface area within a range of from 50 to 250 g/m².

3. The nonwoven filter according to claim 1 or 2, **characterized in that** said flame retardant is selected from the group of ammonium compounds, phosphorus-nitrogen compounds, phosphate esters and salts thereof, expandable graphite, polybrominated diphenyl ethers, polybrominated diphenyls, chloroparaffins, tetrabromobisphenol A, and/or hexabromocyclododecane.

4. The nonwoven filter according to any of claims 1 to 3, **characterized in that** said antistatic agent is selected from the group of long-chained aliphatic amines and amides, ammonium compounds, tin mixed oxides, phosphate esters, and salts thereof.

5. The nonwoven filter according to any of claims 1 to 4, **characterized in that** said flame retardant and/or antistatic agent is a combination of a nitrogen-containing phosphorus salt and at least one other phosphorus compound.

6. The nonwoven filter according to any of claims 1 to 5, **characterized in that** its thickness is within a range of from 1 to 5 mm.

7. A process for preparing a storage filter for general room and process ventilation technology, especially for bag filters of air conditioning systems, consisting of a nonwoven storage filter according to any of claims 1 to 6, **characterized in that** said nonwoven filter
- having a weight per surface area within a range of from 50 to 500 g/m²;
- containing at least 60% by weight of fibers of polyolefin and/or polyester;
- having an initial pressure drop according to DIN EN 779:2005 of at most 400 Pa;
- is provided with a finish by a wet chemical treatment with
(a) antistatic agent, flame retardant and antimicrobial agent;
(b) antistatic agent and flame retardant;
(c) antistatic agent and antimicrobial agent; or
(d) antimicrobial agents and flame retardants;
wherein the amount of finishing agent applied and dried on is less than 5% by weight, based on the weight of the untreated nonwoven filter;
**characterized in that** an amount of from 0.01 to 3% by weight oligo- and/or polyethylene glycol is present on/in the bag filter, based on the weight of the finished filter, wherein said oligo- and/or polyethylene glycol is a component of said flame retardant and/or antistatic agent.

8. The process according to claim 1, **characterized in that** said antistatic agent and/or said flame retardant and/or said antimicrobial agent for the finish is employed in an aqueous dispersion and/or aqueous solution.

9. The process according to claim 7 or 8, **characterized in that** said nonwoven filter is dried at a temperature within a range of from 90 to 150°C after said finishing treatment.

## Revendications

1. Non-tissé filtrant de stockage pour la technique générale de ventilation et d'air de service, notamment pour filtres à poches de systèmes de climatisation, **caractérisé en ce que** ledit non-tissé filtrant
- présente un grammage compris entre 50 et 500 g/m²,
- contient au moins 60 % en poids de fibres de polyoléfine et/ou de polyester,
- présente une chute de pression initiale selon DIN EN 779:2005 d'au plus 400 Pa,
- présente une épaisseur comprise entre 0,5 et 40 mm, et
- est pourvu d'un finissage, la quantité du finissage appliqué et séché étant moins de 5 % en poids, par rapport au poids du non-tissé filtrant non traité, comprenant un traitement par voie chimique humide, choisi parmi
(a) un agent antistatique, un retardateur de flammes et un agent antimicrobien,
(b) un agent antistatique et un retardateur de flammes,
(c) un agent antistatique et un agent antimicrobien, ou
(d) un agent antimicrobien et un retardateur de flammes,
**caractérisé en ce qu'**une quantité de 0,01 à 3 % en poids d'oligoéthylène glycol et/ou de polyéthylène glycol est présente sur/dans le filtre à poches, par rapport au poids du filtre avec le finissage, ledit oligoéthylène glycol et/ou polyéthylène glycol faisant partie dudit retardateur de flammes et/ou dudit agent antistatique.

2. Non-tissé filtrant selon la revendication 1, **caractérisé en ce que** ledit non-tissé filtrant présente au moins deux couches, notamment présentant au moins trois couches, dans lequel une couche de nappe de filage ayant un grammage compris entre 10 et 50 g/m² est adjacente à une couche de non-tissé fondu-soufflé ayant un grammage compris entre 3 et 80 g/m², qui est à son tour adjacente à une couche de non-tissé posé à sec ayant un grammage compris entre 50 et 250 g/m².

3. Non-tissé filtrant selon la revendication 1 ou 2, **caractérisé en ce que** ledit retardateur de flammes est choisi dans le groupe consistant en composés ammonium, composés phosphore-azote, esters phosphoriques, et leurs sels, graphite gonflant, polybromodiphényléthers, polybromodiphényles, paraffines chlorées, tétrabromobisphénol A, et/ou hexabromocyclododécane.

4. Non-tissé filtrant selon l'une quelconque des revendications 1 à 3, **caractérisé en ce que** ledit agent antistatique est choisi dans le groupe consistant en amines et amides aliphatiques à longue chaîne, composés ammonium, oxydes mixtes d'étain, esters phosphoriques, et leurs sels.

5. Non-tissé filtrant selon l'une quelconque des revendications 1 à 4, **caractérisé en ce que** ledit retardateur de flammes et/ou ledit agent antistatique est une combinaison d'un sel de phosphore contenant de l'azote et au moins un autre composé de phosphore.

6. Non-tissé filtrant selon l'une quelconque des revendications 1 à 5, **caractérisé en ce que** son épaisseur est comprise entre 1 et 5 mm.

7. Procédé pour fabriquer un filtre de stockage pour la technique générale de ventilation et d'air de service, notamment pour filtres à poches de systèmes de climatisation, consistant en un non-tissé filtrant de stockage selon l'une quelconque des revendications 1 à 6, **caractérisé en ce que** ledit non-tissé filtrant
- présente un grammage compris entre 50 et 500 g/m²,
- contient au moins 60 % en poids de fibres de polyoléfine et/ou de polyester,
- présente une chute de pression initiale selon DIN EN 779:2005 d'au plus 400 Pa,
- est pourvu d'un finissage par voie chimique humide avec
(a) un agent antistatique, un retardateur de flammes et un agent antimicrobien,
(b) un agent antistatique et un retardateur de flammes,
(c) un agent antistatique et un agent antimicrobien, ou
(d) un agent antimicrobien et un retardateur de flammes,
la quantité du finissage appliqué et séché étant moins de 5 % en poids, par rapport au poids du non-tissé filtrant non traité,
**caractérisé en ce qu'**une quantité de 0,01 à 3 % en poids d'oligoéthylène glycol et/ou de polyéthylène glycol est présente sur/dans le filtre à poches, par rapport au poids du filtre avec le finissage, ledit oligoéthylène glycol et/ou polyéthylène glycol faisant partie dudit retardateur de flammes et/ou dudit agent antistatique.

8. Procédé selon la revendication 7, **caractérisé en ce que** ledit agent antistatique et/ou ledit retardateur de flammes et/ou ledit agent antimicrobien pour le finissage est utilisé dans une dispersion aqueuse et/ou solution aqueuse.

9. Procédé selon la revendication 7 ou 8, **caractérisé en ce que** ledit non-tissé filtrant est séché à une température comprise entre 90 et 150 °C après le finissage.
